# FASCICULE DE BREVET EUROPEEN

(11) **EP 3 657 859 B1**
(45) Date de publication et mention de la délivrance du brevet: **30.03.2022**
(21) Numéro de dépôt: 19210828.0
(22) Date de dépôt: 22.11.2019
(51) Int. Cl.: H04W 48/00, H04W 48/20, H04W 88/16, H04W 4/70

(54) **OPTIMISATION PAR TYPE DE MESSAGE DE L'ÉCHANGE DE DONNÉES ENTRE OBJETS CONNECTÉS**
OPTIMIERUNG DES DATENAUSTAUSCHS ZWISCHEN VERBUNDENEN OBJEKTEN NACH ART DER NACHRICHT
OPTIMIZING DATA EXCHANGE BETWEEN CONNECTED OBJECTED BY TYPE OF MESSAGE

(30) Priorité: 23.11.2018 FR 1871803; 21.12.2018 FR 1874080
(43) Date de publication de la demande: 27.05.2020
(73) Titulaire: BULL SAS, 78340 Les Clayes-sous-Bois (FR)
(72) Inventeur: DEMEILLIEZ, Bruno, 38380 Saint Laurent du Pont (FR); MENIGOT, Gilles, 38190 Froges (FR); CHAABANE, Wajih, 73000 Chambery (FR)
(74) Mandataire: IPAZ

(56) Documents cités:
- WO-A1-2013/077722
- WO-A1-2014/130091
- WO-A1-2014/130091
- KR-A- 20120 122 213
- US-A1- 2015 249 999
- YANG LI ET AL: "Multihoming Support Scheme for Network Mobility Based on Proxy Mobile IPv6", COMPUTING, COMMUNICATION, CONTROL, AND MANAGEMENT, 2008. CCCM '08. ISECS INTERNATIONAL COLLOQUIUM ON, IEEE, PISCATAWAY, NJ, USA, 3 août 2008 (2008-08-03), pages 635-639, XP031314251, ISBN: 978-0-7695-3290-5
- TANGANELLI GIACOMO ET AL: "Edge-Centric Distributed Discovery and Access in the Internet of Things", IEEE INTERNET OF THINGS JOURNAL, IEEE, USA, vol. 5, no. 1, 1 février 2018 (2018-02-01) , pages 425-438, XP011677147, DOI: 10.1109/JIOT.2017.2767381

## Description

La présente invention concerne le domaine des objets connectés et, en particulier, l'échange de données dans une infrastructure de réseau comprenant des objets connectés. L'invention porte notamment sur un procédé d'optimisation de l'utilisation de passerelles de connexion en fonction d'une catégorie de message à envoyer par un objet connecté, ainsi qu'un système de communication apte à mettre en œuvre le procédé, un programme d'ordinateur ayant des instructions pour la mise en œuvre du procédé, et un support d'enregistrement pour ledit programme d'ordinateur.

### [Art antérieur]

Historiquement, les entités adressables sur le réseau Internet étaient uniquement des éléments d'information numériques, à savoir des pages HTML ou d'autres fichiers accessibles en ligne, et identifiables par des adresses URL de sites web, par exemple. Considéré comme la troisième révolution de l'internet, l'internet des objets ou IdO (en anglais « Internet Of Things », ou IoT) peut être regardé comme l'extension d'Internet à des éléments physiques.

L'internet des objets désigne l'ensemble des objets connectés à internet et correspond au domaine des Technologies de l'Information et de la Communication (ou TIC) qui est en pleine expansion. Les dispositifs électroniques concernés par ces applications sont appelés des objets connectés, en ce sens qu'ils peuvent interagir au travers d'une pluralité de sous-réseaux locaux pouvant être connectés à un réseau central à haut débit comme l'Internet. Ainsi, une définition de l'internet des objets est proposée dans l'ouvrage intitulé L'INTERNET DES OBJETS, de Pierre-Jean Benghozi, Sylvain Bureau, et Françoise Massit-Folléa publié aux Éditions de la Maison des sciences de l'homme, Chapitre 1, pp. 15-23, comme étant « un réseau de réseaux qui permet, via des systèmes d'identification électronique normalisés et unifiés, et des dispositifs mobiles sans fil, d'identifier directement et sans ambiguïté des entités numériques et des objets physiques et ainsi de pouvoir récupérer, stocker, transférer et traiter, sans discontinuité entre les mondes physiques et virtuels, les données s'y rattachant. »

Les usages des objets connectés sont très variés et peuvent aller du domaine de l'e-santé à celui de la domotique en passant par les téléphones mobiles. Les objets connectés envahissent un peu plus chaque jour notre quotidien et ils sont également impliqués dans le concept d'environnement intelligent et notamment de ville intelligente (ou « Smart City », en anglais), la surveillance (en anglais : « monitoring ») d'installations industrielles, les transports et la logistique, les voitures autonomes, l'agriculture, etc. En 2015, on comptait 4,9 milliards « objets connectés ». On parle de 25 à 150 milliards d'objets connectés en 2025. A cette croissance exponentielle, s'ajoute une très grande diversité des domaines d'applications : santé, transport, commerce, domotique...

Ce nombre et cette diversité constituent un vrai défi technique pour le transport de données de l'ensemble de ces objets connectés. En particulier, la connectivité entre eux ou à Internet de ces objets connectés peut être variable dans le temps. Dans certains cas, la connectivité peut ne pas être permanente, et évoluer suite par exemple à un problème matériel ou logiciel affectant une passerelle. Dans d'autres cas, elle peut être multiple, c'est-à-dire qu'elle peut s'effectuer simultanément par plus d'une passerelle de connexion à l'Internet, notamment avec la mise en œuvre du concept d'agrégation de liens.

Il a été proposé des procédés de communication des objets connectés dans lesquels une passerelle de connexion était configurée pour déterminer un premier chemin de communication et des premières ressources de communication entre le terminal source et le terminal destinataire (CN102685839). Il a aussi été proposé un procédé permettant l'assignation d'une passerelle selon les caractéristiques de l'objet connecté concerné (US2016/018043). Il a aussi été proposé une solution utilisant les règles ANDSF afin de déterminer les priorités de différents types de réseaux d'accès pour pouvoir effectuer un routage approprié en fonction du type de données devant être routées (WO 2014/13091 A1).

Néanmoins, à ce jour, aucune solution ne permet de gérer de façon dynamique la connectivité d'un objet connecté à des sous-réseaux, plus ou moins disponibles, en fonction de ses besoins de façon à optimiser la communication d'objets connectés vers l'extérieur du sous-réseau (e.g. via l'Internet).

Ainsi, il existe un besoin pour de nouveaux procédés ou systèmes pour l'échange de données dans une infrastructure réseau comprenant des objets connectés.

### [Problème technique]

L'invention a pour but de remédier aux inconvénients de l'art antérieur. En particulier, l'invention a pour but de proposer un procédé d'optimisation de l'utilisation de passerelles en fonction de catégorie de message à envoyer par un objet connecté qui permet une autoadaptation aux caractéristiques de message à envoyer d'une part et aux caractéristiques de connectivité des sous-réseaux incluant l'évolutivité ou la fluctuation dans le temps de cette connectivité, d'autre part. L'invention a en outre pour but de proposer des passerelles, des objets connectés et un système de communication de données capables de mettre en œuvre une utilisation autoadaptative des sous-réseaux dans le temps et en fonction des besoins de l'objet connecté.

### [Brève description de l'invention]

A cet effet, un premier aspect de l'invention, selon la revendication 1, propose un procédé d'optimisation de l'utilisation de passerelles en fonction d'une catégorie de message à envoyer par un objet connecté, ledit objet connecté étant apte à accéder à plusieurs passerelles adaptées à la transmission d'un message envoyé par l'objet connecté, ledit procédé d'optimisation comprenant :
- une procédure de découverte, par l'objet connecté, de passerelles disponibles pour l'objet connecté, ladite procédure de découverte comprenant :
   - la diffusion par l'objet connecté d'un message d'interrogation dans plusieurs sous-réseaux de transport de données, et
   - la réception par l'objet connecté de messages de réponse envoyés par chacune des passerelles disponibles en réponse au message d'interrogation, lesdits messages de réponse contenant des paramètres de connectivité des passerelles et une valeur de durée de validité desdits paramètres de connectivité ;
- une procédure d'attribution de niveaux de priorité aux passerelles disponibles par catégorie de message à envoyer, ladite procédure d'attribution de niveaux de priorité comprenant l'exécution par l'objet connecté d'au moins une fonction de priorisation, pour calculer des niveaux de priorité pour chaque passerelle à partir des paramètres de connectivité et en fonction de la catégorie de message à envoyer ; et
- une procédure de classement par l'objet connecté des passerelles disponibles par ordre de leurs niveaux de priorité respectifs en fonction de la catégorie de message à envoyer, en vue du choix de l'une desdites passerelles disponibles pour l'envoi de messages de données; et
en ce que les niveaux de priorité (P1.1,P1.2,P2.1,P2.2) des passerelles (GW1,GW2) disponibles par catégorie de message sont transmises par l'objet connecté à d'autres objets connectés.

Le procédé selon l'invention permet d'optimiser l'utilisation des passerelles en fonction des messages à envoyer d'une part et de gérer de façon dynamique l'évolution de connectivité de sous-réseaux, par exemple suite à un problème matériel ou logiciel d'autre part. Ainsi, grâce à l'invention, il est possible de réaliser un routage auto adaptatif, une optimisation des coûts de transports des messages et une gestion de la durée de validité des messages transmis. En outre, le procédé selon l'invention permet de tirer avantage de la multiplicité des passerelles vers l'Internet et l'évolution dans le temps de leur connectivité. Les inventeurs proposent donc une solution permettant de répondre aux enjeux de connectivité en proposant un procédé pouvant s'adapter à la diversité des objets connectés mais également pouvant couvrir l'ensemble des objets connectés déployés, qu'ils soient ou non directement accessibles par un système centralisé.

En particulier, la transmission des niveaux de priorité des passerelles disponibles par catégorie de message à d'autres objets connectés peut permettre de partager entre objets connectés une même répartition des passerelles prioritaire par catégorie de message à envoyer.

### Selon d'autres caractéristiques optionnelles du procédé :

- il comprend en outre, lorsque l'objet connecté dit alors « émetteur » initie une étape d'envoi d'un message de données, la catégorisation du message à envoyer par l'objet connecté émetteur, pour attribuer une valeur de catégorie audit message, et la transmission du message de données par l'objet connecté émetteur à la passerelle disponible qui présente le niveau de priorité maximum pour la catégorie du message à envoyer. Ainsi, c'est l'objet connecté qui détermine en fonction des paramètres de son message à envoyer la passerelle qui sera la plus adaptée ;
- il comprend en outre une étape de mise à jour des niveaux de priorité, ladite étape de mise à jour comportant, suite à une interrogation par l'objet connecté, la diffusion ou la transmission par certaines au moins des passerelles disponibles de nouveaux paramètres de connectivité à l'objet connecté et une mise à jour automatique des niveaux de priorité desdites passerelles disponibles par l'objet connecté. Ainsi, l'objet connecté dispose pour chaque catégorie de niveaux de priorité à jour et n'a pas à attendre la transmission d'informations depuis les passerelles lors de l'envoi de message. Il peut donc rapidement identifier la passerelle la plus performante à un instant donné ;
   En particulier, l'étape de mise à jour peut comporter l'émission par l'objet connecté d'un message de mise à jour à destination de certaines au moins des passerelles disponibles, les passerelles destinataires étant sélectionnées en fonction de la valeur de durée de validité des paramètres de connectivité leur étant associée. Cela permet de limiter le trafic de données sur le sous-réseau et de n'échanger que l'essentiel des données ;
- les niveaux de priorité des passerelles disponibles par catégorie de message sont mémorisées sur une mémoire de l'objet connecté ;
- les paramètres de connectivité propres à chaque passerelle qui sont pris en compte, par l'objet connecté, pour le calcul des niveaux de priorité, comprennent : un type de connectivité, un coût de transport des données par unité de données, un indice de qualité de la connectivité, un temps de latence, et/ou un débit de transmission associés à la passerelle du réseau. Ainsi, l'objet connecté peut sélectionner une passerelle proposant la meilleure qualité de service pour la catégorie de message considérée ; et/ou
- les caractéristiques de message propres à chaque message à envoyer et pris en compte par l'objet connecté pour la catégorisation du message, comprennent : la taille du message, un indice relatif à l'urgence du message, et/ou le format d'éventuels objets associés au message. L'utilisation de telles données, simples à extraire, facilite la mise en œuvre du procédé.
- il comporte, lorsque l'objet connecté initie une procédure d'envoi d'une requête :
- une procédure de catégorisation de messages à transmettre, comportant une catégorisation de la requête à envoyer par l'objet connecté de façon à définir une valeur de catégorie de la requête et une catégorisation d'une réponse attendue par l'objet connecté de façon à définir une valeur de catégorie de la réponse, les catégorisations comprenant l'exécution par l'objet connecté d'au moins une fonction de catégorisation, pour calculer les valeurs de catégorie de la requête et de la réponse à partir de paramètres de message de ladite requête et de ladite réponse, et
- une transmission de la requête par l'objet connecté à une passerelle disponible présentant un niveau de priorité maximum pour la valeur de catégorie de la requête, ladite requête transmise comportant un identifiant de la passerelle à utiliser pour la transmission de la réponse à l'objet connecté, ledit identifiant correspondant à une passerelle présentant un niveau de priorité maximum pour la valeur de catégorie de la réponse. Cela permet d'optimiser l'utilisation des passerelles en fonction des messages à envoyer d'une part et à recevoir d'autre part. Ainsi, le routage des messages est adapté à la nature des flux (montant / descendant) et aux caractéristiques des passerelles. Ainsi, il est possible de réaliser un routage auto adaptatif, un désengorgement des réseaux et une optimisation des coûts de transports des messages. En effet, certains réseaux de communication seront particulièrement adaptés à une certaine catégorie de message montant alors que d'autres seront plus adaptés à une autre catégorie de message descendant. Les passerelles sont alors utilisées au mieux en fonction des caractéristiques des messages transmis contrairement aux systèmes antérieurs proposant un seul chemin ou routage prédéfini.
- la requête transmise comporte en outre une indication temporelle correspondant à une période durant laquelle la réponse doit être transmise. Cela est particulièrement avantageux lorsque des objets connectés sont programmés pour n'être connectés que ponctuellement. Ainsi, le message de réponse pourra être transmis ultérieurement à une période durant laquelle l'objet connecté sera accessible ;
- il comporte une procédure préalable d'attribution, par chacune des passerelles d'une adresse IP fixe à l'objet connecté et d'un port dédié à ladite adresse IP fixe et tous les messages reçus sur ledit port dédié sont transmis à l'objet connecté à l'adresse IP fixe préalablement attribuée. Cela permet de faciliter la transmission de la réponse à l'objet connecté. En particulier dans ce cas, la requête transmise comporte le port dédié à l'objet connecté de la passerelle à utiliser pour la transmission de ladite réponse.
- les caractéristiques de message propres à chaque message à transmettre et pris en compte par l'objet connecté pour la catégorisation du message, comprennent : la taille du message, un indice relatif à l'urgence du message, et/ou le format d'éventuels objets associés au message. L'utilisation de telles données, simples à extraire, facilite la mise en œuvre d'un procédé conforme à l'invention.
   Selon la revendication 12, l'invention porte sur un objet connecté adapté pour être connecté à plusieurs sous-réseaux, l'objet connecté étant en outre apte à, de préférence configuré pour, mettre en œuvre un procédé d'optimisation de l'utilisation de passerelles disponibles en fonction d'une catégorie de message à envoyer, et comprenant à cet effet :
- un module de découverte comportant :
   - des moyens de diffusion d'un message d'interrogation dans les sous-réseaux disponibles ; et
   - des moyens de réception d'un message de réponse envoyé par chacune des passerelles disponibles en réponse au message d'interrogation, ledit message de réponse contenant des paramètres de connectivité des passerelles et une valeur de durée de validité desdits paramètres de connectivité ;
- un module d'attribution de niveaux de priorité, aux passerelles disponibles, par catégorie de message, comportant un processeur pour l'exécution d'au moins une fonction de priorisation, pour calculer des niveaux de priorité pour chaque passerelle disponible à partir des paramètres de connectivité et en fonction de la catégorie de message à envoyer ; et
- un module de classement des passerelles disponibles par ordre de leurs niveaux de priorité respectifs en fonction de la catégorie de message à envoyer, en vue du choix de l'une desdites passerelles disponibles pour l'envoi de messages de données.

En outre, l'objet connecté selon l'invention peut comporter un module de gestion d'accès prioritaire comportant des moyens de catégorisation d'un message à envoyer, configurés pour attribuer une valeur de catégorie audit message, et des moyens de transmission configurés pour transmettre le message à envoyer à la passerelle disponible qui présente le niveau de priorité maximum pour la valeur de catégorie du message à envoyer.

L'objet connecté selon l'invention permet d'utiliser de façon optimisée les passerelles en fonction des messages à envoyer d'une part et de l'évolution de la connectivité de sous-réseaux d'autre part. En outre, l'objet connecté présente l'avantage de pouvoir fonctionner avec des passerelles classiques étant donné que les calculs sont réalisés au niveau de l'objet connecté sur la base de caractéristiques transmises. Ainsi, grâce à l'invention, il est possible de réaliser un routage auto adaptatif, une optimisation des coûts de transports des messages et une gestion de la durée de validité des messages transmis. En outre, un tel objet connecté selon l'invention permet de tirer avantage de la multiplicité des passerelles vers l'Internet et l'évolution dans le temps de leur connectivité.

Selon un autre aspect, l'invention porte sur un système de communication de données comprenant un objet connecté selon la revendication 12, ledit système comportant en outre des passerelles accessibles par ledit objet connecté pour transmettre un message et dans lequel les passerelles sont configurées pour envoyer un message de réponse en réponse au message d'interrogation de l'objet connecté, lesdits messages de réponse contenant des paramètres de connectivité des passerelles et une valeur de durée de validité desdits paramètres de connectivité.

Bien que le terme "invention" apparaisse de nombreuses fois dans la suite de la description, ce terme doit alors être interprété comme une illustration, à titre d'exemple, de la présente invention qui est elle-même uniquement définie par les revendications ci-après.

D'autres avantages et caractéristiques de l'invention apparaitront à la lecture de la description suivante donnée à titre d'exemple illustratif et non limitatif, en référence aux Figures annexées :
La figure 1 représente un schéma montrant une architecture de réseaux locaux comprenant plusieurs objets connectés dont un objet connecté pouvant utiliser plusieurs réseaux locaux ;
Les Figures 2A et 2B, deux diagrammes fonctionnels illustrant les échanges entre des passerelles et deux objets connectés de l'architecture de la Figure 1, dans des modes de mises en œuvre d'un procédé selon l'invention ; et, La figure 3 représente, un schéma montrant l'architecture d'une passerelle et d'un objet connecté selon un mode de réalisation de l'invention.

### [Description de l'invention]

Dans la suite de la description, un « **objet connecté** » est un dispositif ou système électronique connecté, de préférence sans fil, à un réseau et pouvant partager des informations avec un serveur, un ordinateur, une tablette électronique, un smartphone ou tout autre appareil électronique.

L'expression « **sous-réseau** » ou « **réseau local** » au sens de l'invention correspond par exemple à des réseaux locaux servis chacun par au moins une passerelle de connexion à un autre réseau tel qu'Internet et auxquels sont connectés des objets connectés.

L'expression « **réseau principal** » au sens de l'invention est un réseau étendu, à haut débit, utilisant un protocole de transport fiable en mode connecté, comme par exemple le protocole TCP/IP (TCP ou « Transmission Control Protocol » étant un protocole de couche 4 du modèle OSI ou « Open Systems Interconnection » selon une terminologie anglo-saxonne, sur IP qui est un protocole de la couche 3 du modèle OSI). Le protocole TCP/IP est documenté dans la RFC 7931 de l'IETF (« Internet Engineering Task Force » selon une terminologie anglo-saxonne). Il peut s'agir par exemple d'un réseau Internet.

On entend par « **passerelle** » ou « **passerelles de connexion** » au sens de l'invention un équipement assurant la connexion entre des équipements appartenant à des réseaux différents, par exemple assurant la connexion des équipements d'un réseau local (adresses IP, pour « Internet Protocol » selon une terminologie anglo-saxonne, locales) et des services internet (adresses IP publiques). De ce fait, elle possède les deux types d'adresses IP. Son adresse IP publique, attribuée par le fournisseur d'accès internet, plus communément désigné par l'acronyme « FAI », lui permet d'échanger les données avec le réseau Internet. Son adresse IP locale lui permet d'échanger des données avec les équipements du réseau local. Elle est généralement spécifique et attribuée par défaut par le FAI.

On entend par « **niveaux de priorité** » ou « **niveau de priorité** » un ordonnancement croissant P1 à Pn selon des caractéristiques de type de connectivité, coût du transport, indice de qualité de la connectivité etc... pour calculer une valeur de priorité qui correspond au niveau de priorité de chaque passerelle. Autrement dit, si P2>P1 alors la passerelle ayant un niveau de priorité P2 sera prioritaire sur la passerelle ayant un niveau de priorité P1.

L'expression « **fonction de priorisation** » au sens de l'invention peut correspondre à un protocole ou à une série d'instructions permettant de calculer un niveau de priorité à partir de valeurs de priorités données et selon une fonction ou formule prédéterminée.

L'expression « **fonction de catégorisation »** au sens de l'invention peut correspondre à un protocole ou à une série d'instructions permettant de calculer une catégorie attribuable à un message à envoyer à partir de valeurs de caractéristiques de message et selon une fonction ou formule prédéterminée. En outre, le nombre et les caractéristiques des catégories peuvent être prédéterminées et enregistrées au sein d'un référentiel mémorisé au niveau de l'objet connecté.

Au sens de l'invention « **message d'interrogation »** correspond à un message de type BCM (« Broadcast Message » en terminologie anglosaxonne) diffusé par un objet connecté à destination des passerelles et/ou des autres objets connectés du réseau local.

Au sens de l'invention « **message de réponse »** correspond à un message envoyé par une ou plusieurs passerelles en réponse à un message d'interrogation et qui comporte un identifiant ainsi que des paramètres de connectivité des passerelles et une valeur de durée de validité desdits paramètres de connectivité.

Au sens de l'invention « **message de données** » correspond à un message envoyé entre deux objets connectés au travers d'au moins une passerelle et comprenant des données d'un objet connecté.

Au sens de l'invention « **message de présentation** » correspond à un message envoyé par une ou plusieurs passerelles en réponse à un message d'interrogation et qui comporte un identifiant ainsi que des paramètres de connectivité des passerelles et une valeur de durée de validité desdits paramètres de connectivité.

On entend par « **traiter** », « **calculer** », « **déterminer** », « **afficher** », « **extraire** » « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. En particulier, des opérations de calcul sont effectuées par le processeur du dispositif, les données produites sont inscrites dans un champ correspondant dans une mémoire de données et ce ou ces champs peuvent être restitués à un utilisateur par exemple au travers d'une Interface Homme Machine mettant en forme de telles données. Ces opérations peuvent se baser sur des applications ou des logiciels.

Les termes ou expressions « **application** », « **logiciel** », « **code de programme** », et « **code exécutable »** signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (« ASIC » selon une terminologie anglo-saxonne) et un circuit logique programmable. Un seul processeur ou plusieurs autres unités peuvent être utilisées pour mettre en œuvre l'invention.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Dans les revendications, le terme "comprendre" ou "comporter" n'exclut pas d'autres éléments ou d'autres étapes.

Dans la suite de la description, les mêmes références sont utilisées pour désigner les mêmes éléments. Les signes de référence ne sauraient être compris comme limitant la portée de l'invention. En outre, les différentes caractéristiques présentées et/ou revendiquées peuvent être avantageusement combinées. Leur présence dans la description ou dans des revendications dépendantes différentes, n'excluent pas cette possibilité.

Les objets de notre quotidien ou de nos industries sont de plus en plus souvent connectés et aptes à échanger des données avec d'autres dispositifs. En outre, il existe de plus en plus d'objets connectés présentant une pluralité de fonctionnalités où chacune desdites fonctionnalités n'aura pas les mêmes besoins matériels et notamment de connectivités. Ainsi, un appareil de communication mobile tel qu'un téléphone portable peut être utilisé pour établir des communications par la voix, des téléchargements de vidéo en streaming, des envois de fichiers de quelques kilooctets ou à l'inverse très volumineux. En outre, pour cela l'appareil de communication mobile aura à sa disposition plusieurs réseaux de communication fonctionnant selon différents protocoles : WIFI, LTE, UMTS... Or aujourd'hui, il n'existe pas de solution permettant de gérer, de façon dynamique, l'utilisation de sous-réseaux en fonction de catégorie de message à envoyer par un objet connecté de façon à permettre une connectivité optimisée de l'objet connecté en fonction de ses besoins. Ainsi, les inventeurs ont développé un nouveau procédé 1 d'optimisation de l'utilisation de passerelles et plus largement de sous-réseaux en fonction de catégorie de message à envoyer. En particulier, les inventeurs ont développé un procédé d'optimisation de l'utilisation de passerelles en fonction d'une catégorie de message à envoyer par un objet connecté apte à accéder à plusieurs passerelles appartenant par exemple à plusieurs sous-réseaux. Le message à envoyer étant par exemple destiné à d'autres objets connectés mais aussi à des serveurs ou autres structures informatiques.

L'invention va être décrite dans le contexte d'un réseau principal, et de sous-réseaux. L'invention ne se limite pas, toutefois, à cet exemple, et peut trouver des applications dans toute configuration dans laquelle il y a plusieurs sous-réseaux disponibles pour un même objet connecté (IoT1).

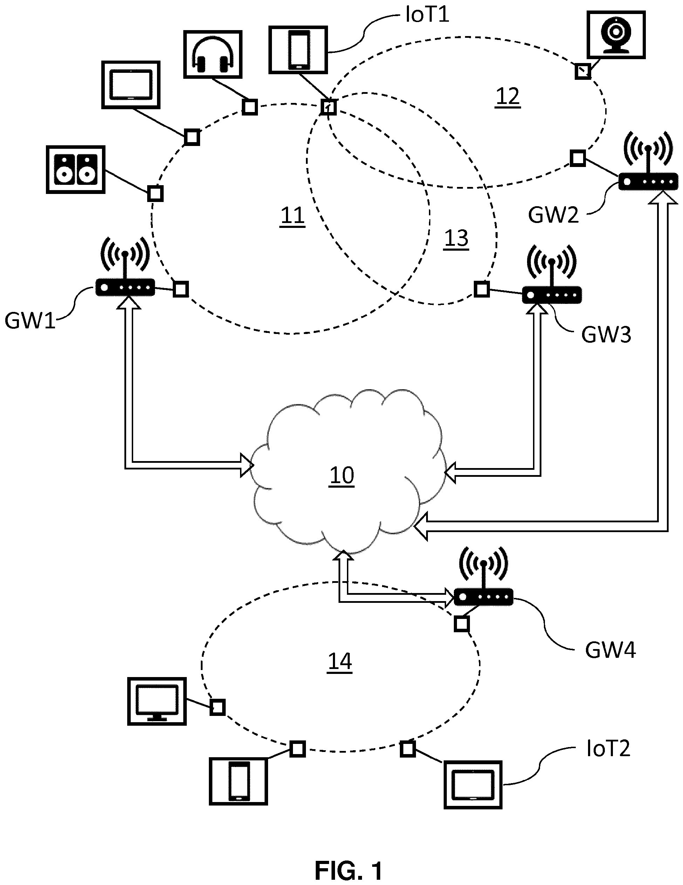

En référence au schéma de **la** **figure 1**, une architecture de réseaux locaux à laquelle le procédé de l'invention peut avantageusement s'appliquer comprend plusieurs sous-réseaux tels que par exemple un premier sous-réseau 11, un second sous réseau 12 et un troisième sous réseau 13 distincts auxquels est connecté un objet connecté IoT1, ces sous-réseaux étant connectés chacun au réseau principal 10. Le réseau principal 10 dans l'exemple représenté, est le réseau Internet. Le réseau principal 10 étant lui-même connecté à un sous réseau 14. Le sous-réseau 11 comprend au moins une passerelle de connexion, comme la passerelle GW1 de connexion à Internet de l'exemple représenté. De même, les sous-réseaux 12,13,14 comprennent chacun au moins une passerelle de connexion comme les passerelles de connexion GW2, GW3, et GW4 de l'exemple représenté.

Chacun des réseaux locaux 11, 12, 13 et 14, comprend un ou plusieurs objets connectés, comme l'objet connecté IoT1 du réseau local 11 représenté, et l'objet connecté IoT2 du réseau local 14 représenté, respectivement. Ces objets connectés peuvent être, de manière non-limitative : un téléphone portable connecté, une tablette connectée, un ordinateur portable connecté, des enceintes connectées, un casque audio connecté, une caméra connectée, etc. L'invention n'entend pas être limitée, ni par le nombre ni par la nature des objets ainsi connectés aux sous-réseaux 11, 12, 13 et 14. Il peut s'agir de tout objet physique, lieu ou personne identifiés par des puces RFID, par exemple, ou un code-barre, un code EAN (« European Article Numbering »), un code EPC (« Electronic Product Code »), etc. Chaque objet est identifié par un code individuel unique qui le distingue de tous les autres au sein du réseau local concerné.

On notera que l'identification des objets suit une tendance lourde, dans le contexte de l'émergence de l'IdO, vers l'attribution d'une adresse IP unique propre à chaque objet connecté. C'est pourquoi, dans ce qui suit, on considèrera en tant que de besoin que l'identifiant unique de chaque objet connecté de chaque sous-réseau est une adresse IP. Ceci n'est toutefois pas un prérequis des modes de mise en œuvre d'un procédé conforme à l'invention. En effet, l'interface entre les objets connectés des réseaux locaux et d'autres sous réseaux ou le réseau Internet, dont les connexions sont des connexions IP, est assurée par les passerelles GW1, GW2, GW3 et GW4 montrées à la figure 1, qui peuvent gérer une conversion ou correspondance d'adresses entre un espace d'adressage quelconque d'un sous-réseau d'une part, et l'espace d'adressage IP d'un réseau principal (e.g. internet) d'autre part.

Les sous-réseaux 11, 12, 13 et 14 peuvent être des réseaux spécifiquement dédiés aux objets connectés comme par exemple :
- un réseau Sigfox ;
- un réseau LoRa utilisant le protocole LoRaWAN (acronyme de « Long Range Wide-area Network » selon une terminologie anglo-saxonne) qui comme son nom l'indique est un réseau étendu à longue portée ;
- ou bien des réseaux basés sur un autre protocole sans fil par ondes radio comme par exemple :
- un réseau à dimension personnelle (ou WPAN, de l'anglais « Wireless Personal Area Networks ») comme un réseau ZigBee basé sur la norme IEEE 802.15.4 ;
- un réseau Wi-Fi ;ou un réseau Bluetooth (norme IEEE 802.15.1) ; etc.

La présente invention se présente comme un mécanisme permettant de transporter des données (i.e. de message de données) des loTs se trouvant dans un premier sous-réseau, en particulier de l'IoT1, vers d'autres loTs se trouvant dans un ou plusieurs sous-réseaux différents. Dans les réseaux de communications de données, les protocoles de la couche transport ont ainsi pour vocation de transporter les données d'une application à une autre (on parle aussi de programmes applicatifs), qui s'exécutent sur des machines hôtes respectives et potentiellement dans des réseaux locaux respectifs distants l'un de l'autre, et connectés ensemble par l'intermédiaire d'un réseau étendu comme Internet.

En particulier, comme cela est représenté dans la figure 1, un des objets connectés IoT1 est capable de se connecter aux trois sous-réseaux 11, 12, 13 disposants chacun d'une passerelle de connexion. Ainsi, l'objet connecté dispose de plusieurs solutions pour accéder à des sous réseaux distants tel que le sous réseau 14 représenté.

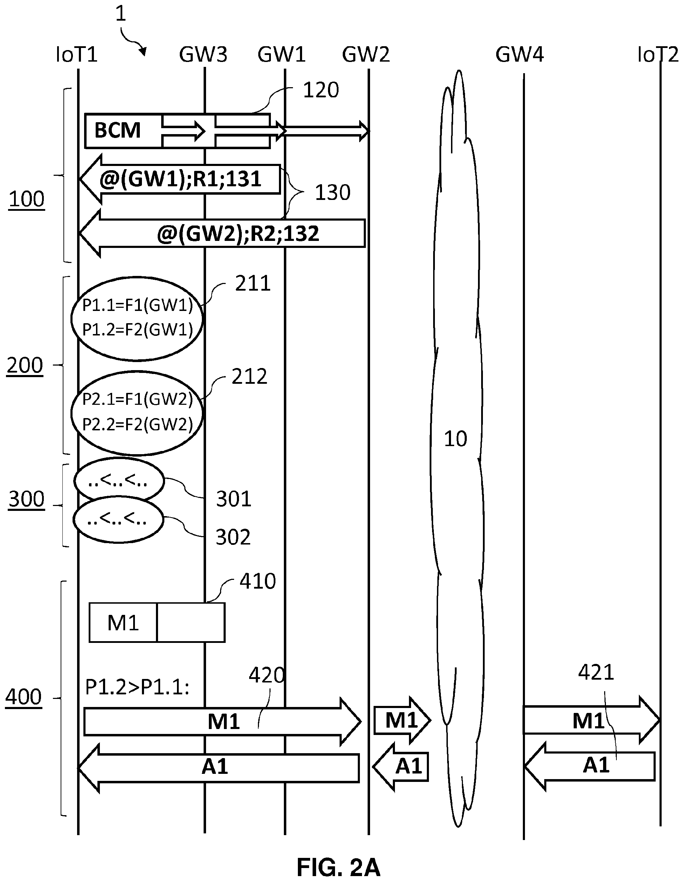

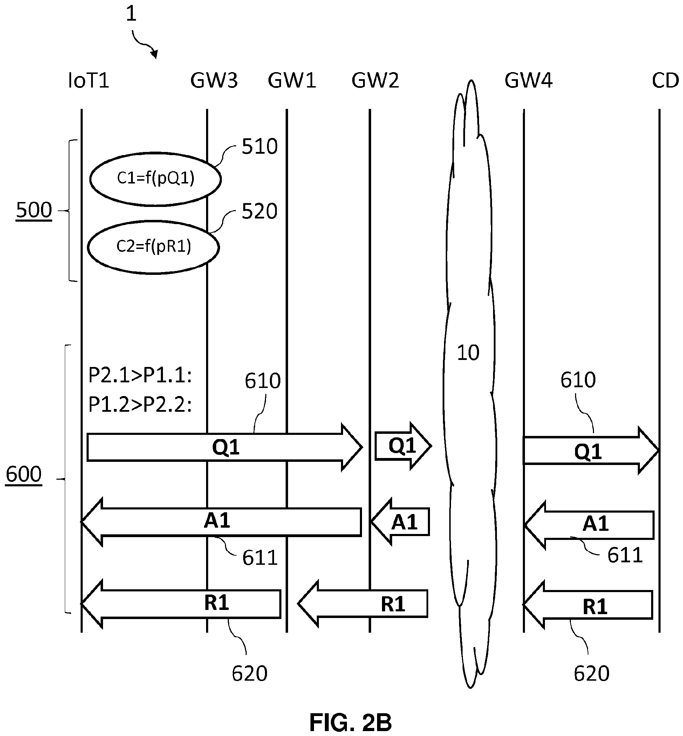

**Des modes de mise en œuvre d'un procédé selon l'invention** vont maintenant être décrits en référence au diagramme fonctionnel de **la** **figure 2**. On considèrera à cet effet un cas d'usage dans lequel l'objet connecté IoT1 de la figure 1 doit envoyer des données à l'objet connecté IoT2 du réseau local 14. A cet effet, le procédé selon l'invention permet d'utiliser en permanence la passerelle de connexion disponible qui offre les meilleures performances considérant le type de message à envoyer. L'objet connecté IoT1 est par exemple capable de se connecter à trois réseaux de communication : fibre optique, 4G et ADSL. En effet, en fonction du message à envoyer cela ne sera pas obligatoirement la même passerelle qui sera la plus adaptée.

Pour obtenir ce résultat, le procédé 1, mis en œuvre par un objet connecté IoT1, comprend tout d'abord une procédure 100 de découverte de passerelles disponibles pour ledit objet connecté IoT1, à savoir les passerelles GW1 et GW2 dans l'exemple montré à la figure 2 ; puis une procédure 200 d'attribution de niveaux de priorité aux passerelles disponibles par catégorie de message à envoyer et enfin un classement 300 par l'objet connecté IoT1 des passerelles disponibles GW1 et GW2 par ordre de leurs niveaux de priorité respectifs en fonction de la catégorie de message à envoyer.

En outre, le procédé 1 selon l'invention peut comporter une étape d'envoi 400 d'un message de données M1 par l'objet connecté IoT1. Cette étape d'envoi 400 pouvant comporter un échange de messages de données et de messages d'acquittement correspondants, pour l'envoi des données de l'objet IoT1 vers l'objet IoT2, au travers, de l'une des passerelles GW1 et GW2 du réseau local 11, du réseau principal 10, et de la passerelle du réseau local 14. Dans des modes de mise en œuvre, la procédure 100 de découverte, la procédure 200 d'attribution de niveaux de priorité et/ou la procédure de classement 300 sont initiées à chaque fois que l'objet connecté IoT1 se connecte à un nouveau réseau local. De même, ces procédures de découverte 100, d'attribution 200 de niveaux de priorité et/ou de classement 300 peuvent être déclenchées en réponse à la détection de la déconnexion de l'objet connecté à un sous réseau auquel il était connecté, en raison d'une panne matérielle par exemple, ou encore d'une mise à jour logicielle. Ceci permet d'adapter les niveaux de priorité respectivement associés aux passerelles disponibles pour l'objet connecté IoT1, et qui sont utilisés par ce dernier comme il sera explicité plus loin, à l'évolution de la connectivité des passerelles.

Commençons par exposer **la procédure 100 de découverte, par un objet connecté IoT1, de passerelles disponibles pour l'objet connecté,** telle qu'elle est appliquée aux passerelles GW1, GW2 et GW3, conformément à l'exemple représenté.

Cette procédure 100 de découverte de passerelles disponibles peut comprendre initialement la connexion de l'objet connecté à des sous-réseaux disponibles. Les différentes étapes et caractéristiques particulières de cette connexion seront dépendantes des sous-réseaux concernés. Par exemple, la connexion peut comporter des étapes d'attachement initial, d'authentification et d'attribution d'une adresse IP.

Comme cela est illustré, la procédure 100 de découverte comprend la diffusion 120 par l'objet connecté IoT1 d'un message d'interrogation (message BCM, mis pour « Broadcast Message » dans la flèche rectangulaire symbolisant l'étape de diffusion 120 à la figure 2) dans plusieurs sous-réseaux 11,12,13 de transport de données. Ce message BCM est alors reçu par les passerelles GW1, GW2 et GW3 qui sont connectées aux réseaux locaux 11, 12 et 13, comme représenté à la figure 1, et aussi par les autres objets connectés des réseaux locaux 11, 12 et 13.

En réponse, l'objet connecté IoT1 reçoit un message de réponse envoyé par chaque passerelle de connexion disponible ayant reçu un message d'interrogation. En outre, l'objet connecté peut également recevoir un message de réponse des autres IoT qui contient un identifiant d'un desdits autres objets connectés. Ainsi, en particulier, le message de réponse 131 retourné par la passerelle GW1 à l'objet connecté IoT1 comprend un identifiant de la passerelle GW1 (par exemple son adresse IP notée @(GW1) dans la flèche symbolisant le message 131 à la figure 2), d'une part, et des valeurs de paramètres de connectivité de la passerelle GW1 et une valeur de durée de validité desdits paramètres de connectivité (notés R1 à la figure 2), d'autre part. De la même manière, le message de réponse 132 retourné par la passerelle GW2 à l'objet connecté IoT1 comprend un identifiant de la passerelle GW2 (par exemple son adresse IP notée @(GW2) dans la flèche symbolisant le message 132 à la figure 2), d'une part, et des valeurs de paramètres de connectivité de la passerelle GW2 et une valeur de durée de validité desdits paramètres de connectivité (notés R2 à la figure 2), d'autre part. Dans l'exemple présenté à la figure 2, la passerelle GW3 n'est pas active au moment de l'envoi du BCM et n'a pas envoyé de message de réponse.

Le procédé 1 selon l'invention comporte également une **procédure 200 d'attribution de niveaux de priorité aux passerelles GW1, GW2 disponibles par catégorie de message à envoyer.** Cette procédure est de préférence réalisée par l'objet connecté IoT1. Ainsi, il n'est pas nécessaire de configurer chacune des passerelles disponibles mais seulement l'objet connecté IoT1 souhaitant bénéficier du procédé selon l'invention.

En particulier et comme cela est illustré dans la figure 2, la procédure 200 d'attribution de niveaux de priorité comprend l'exécution 211, 212 par l'objet connecté d'au moins une fonction de priorisation. Cette au moins une fonction de priorisation permet de calculer, à partir des paramètres de connectivité, plusieurs niveaux de priorité pour chacune des passerelles de connexion, chacun des niveaux de priorité correspondant à une catégorie de message à envoyer. En particulier, la procédure d'attribution 200 peut comporter l'exécution d'une fonction de priorisation par catégorie de message. En particulier, l'exécution de l'au moins une fonction de priorisation permet de calculer au moins deux niveaux de priorité par passerelle, chacun des niveaux de priorité calculé étant associé à une catégorie de message à envoyer. De façon préférée, elle permet de calculer au moins quatre niveaux de priorité par passerelle, de façon encore plus préférée au moins six niveaux de priorité par passerelle.

Dans un exemple de mise en œuvre d'un procédé conforme à l'invention, deux fonctions de priorisation F1 et F2 ont été mémorisées par l'objet connecté IoT1 en vue de leur utilisation par ledit objet connecté pour le calcul de deux niveaux de priorité (i.e. un par catégorie de message) pour chacune des passerelles disponibles sur la base des caractéristiques de connectivité des passerelles. Alternativement, une fonction de priorisation pourrait être utilisée dès lors, par exemple, qu'elle comporte une variable se référant à la catégorie de message et qu'elle peut donc produire plusieurs niveaux de priorité. A la figure 2, ces calculs ont été symbolisés dans les bulles qui illustrent les étapes 211 et 212, respectivement par les expressions P1.1=F1(GW1), P1.2=F2(GW1), P2.1=F1(GW2) et P2.2=F2(GW2), respectivement. Ces calculs utilisent donc des fonctions F1 et F2 sur la base de caractéristiques de connectivité de chaque passerelle GW1 et GW2. Ainsi, les niveaux de priorité P1.1, P1.2, P2.1 et P2.2 qui sont obtenus sont des valeurs véritablement comparables en l'occurrence deux à deux. En effet dans cet exemple, dans le cas d'une catégorie 1 de message, ce sont les niveaux de priorité P1.1 et P2.1 qui s'appliqueront tandis que ce sont les niveaux de priorité P1.2 et P2.2 qui s'appliqueront dans le cas d'une catégorie 2 de message.

Dans un exemple de mise en œuvre non limitatif d'un procédé conforme à l'invention, les caractéristiques de connectivité, propres à chaque passerelle qui sont prises en compte pour le calcul de leur niveau de priorité, comprennent notamment et de manière non limitative :
- un type de connectivité, par exemple le fait qu'il s'agisse d'un réseau filaire, d'un réseau 3G ou 4G-LTE, d'un réseau à courte portée du type Wi-Fi ou Bluetooth, etc. ;
- un coût de transport des données par unité de données, exprimé par exemple par Kilooctet de données transporté ;
- un indice de qualité de la connectivité, par exemple un taux moyen d'erreur sur les bits, un temps de latence constaté, et/ou un débit de transmission associés à la passerelle considérée ; etc...

Avantageusement, les caractéristiques de connectivité propres à chaque passerelle comportent au moins un indice représentatif du taux d'échec de transmission de message par chacune des passerelles. De préférence, il s'agit d'un indice représentatif du taux d'échec de transmission de message par catégorie de message par chacune des passerelles. Le taux d'échec de transmission de message est une donnée que les passerelles sont généralement aptes à mémoriser. L'indice représentatif du taux d'échec de transmission de message par catégorie de message peut par exemple être généré par l'objet connecté.

D'une manière générale, ces caractéristiques rendent compte de la performance des connexions IP établie à travers la passerelle concernée en termes de qualité de service (QoS), appréciées au regard du débit de transmission, de la latence, d'un taux de retransmission, etc...

En outre, la valeur de durée de validité desdits paramètres de connectivité peut être prise en compte dans la fonction de priorisation et/ou associée au niveau de priorité calculé.

Ensuite, le procédé selon l'invention comporte une **procédure 300 de classement des passerelles disponibles** GW1 et GW2 par ordre de leurs niveaux de priorité respectifs en fonction de la catégorie de message à envoyer. Cette procédure est de préférence réalisée par l'objet connecté IoT1. Cette procédure 300 de classement permet de sélectionner l'une desdites passerelles disponibles pour l'envoi de messages de données ou plus largement d'établir un ordre de préférence pour la transmission d'une catégorie donnée de message. La procédure 300 de classement comporte par exemple un premier classement 301 des passerelles pour une première catégorie de message puis un second classement 302 des passerelles pour une seconde catégorie de message. Comme précédemment mentionné, l'envoi de messages de données peut par exemple se faire à destination d'autres objets connectés ou systèmes appartenant à un autre sous-réseau ou à d'autres sous-réseaux.

Bien entendu, ces procédures peuvent également être mises en œuvre par d'autres objets connectés et dans les autres sous-réseaux comme le réseau local 14, indépendamment de sa mise en œuvre par l'objet connecté IoT1.

Dans des modes de mises en œuvre alternatifs, le procédé comprend une mise à jour automatique du niveau de priorité de certaines au moins des passerelles du réseau. Par exemple, la mise à jour automatique du niveau de priorité, par catégorie de message, des passerelles est réalisée de manière périodique, à une fréquence qui est programmable au niveau de l'objet connecté.

Le procédé peut avantageusement comporter une répétition périodique des procédures 100, 200 300 par l'objet connecté IoT1. Alternativement, la répartition peut être fonction de la connexion de l'objet connecté IoT1 à de nouveaux sous-réseaux. Avantageusement, la mise à jour des niveaux de priorité peut être déclenchée par l'objet connecté IoT1 en fonction de la valeur de durée de validité des paramètres de connectivité des passerelles de connexion.

Par exemple, la mise à jour automatique des niveaux de priorité des passerelles est réalisée de manière périodique, à une fréquence qui est programmable au niveau de chaque objet connecté, par un nouveau calcul en utilisant la ou les mêmes formules de priorisation F1, F2 telle(s) que mémorisée(s) au niveau de l'objet connecté, mais appliquées à des valeurs mises à jour des caractéristiques de connectivité des passerelles disponibles au moment de la mise à jour.

L'homme du métier appréciera qu'un procédé selon l'invention et en particulier une procédure d'attribution de niveaux de priorité, peut être appliquée à tout ou partie des passerelles de connexion auxquelles peut se connecter l'objet connecté IoT1.

Le procédé peut également comporter la diffusion ou la transmission par les passerelles de leurs caractéristiques de connectivité mises à jour à un ou plusieurs objets connectés. La diffusion ou la transmission est réalisée par au moins certaines passerelles, par exemple au moins deux passerelles de façon à laisser le choix à l'objet connecté. Ceci permet d'adapter, à l'évolution des conditions de fonctionnement des passerelles, les niveaux de priorité respectivement associés aux passerelles et qui sont utilisés par l'objet connecté IoT1 comme il sera explicité plus loin.

L'homme du métier appréciera que le procédé selon l'invention et en particulier la procédure 200 d'attribution de niveaux de priorité, peut être appliquée à tout ou partie des passerelles de connexion auxquelles peut se connecter l'objet connecté IoT1. La procédure 200 d'attribution peut également être mise en œuvre dans les autres sous-réseaux comme le réseau local 14, indépendamment de sa mise en œuvre dans le réseau local 11.

La figure 2 illustre également ce qui se passe lorsque l'objet connecté IoT1 émet un message de données à destination d'un autre objet connecté, en l'occurrence à destination de l'objet connecté IoT2 du réseau local 14. Il s'agit **de l'étape d'envoi 400 d'un message de données M1 par l'objet connecté IoT1.**

Cette étape d'envoi 400 comporte et généralement débute, par une catégorisation 410 du message à envoyer par l'objet connecté émetteur IoT1. Une telle catégorisation permet d'attribuer une valeur de catégorie audit message. Cette catégorisation peut par exemple se faire en fonction de plusieurs paramètres de message tels que de la taille du message à envoyer, d'un type d'application souhaitant envoyer le message (identifié par exemple par un code d'application), de l'identifié du destinataire, ou encore d'une information sur le type de message à envoyer (e.g. fichier texte, fichier vidéo, vidéo en streaming, voix). En outre, l'attribution de la valeur de catégorie peut se faire via l'utilisation de tables de données ou d'une fonction de catégorisation permettant de prendre en compte plusieurs paramètres. Ainsi, de façon préférée, le procédé selon l'invention comporte l'identification d'une catégorie de message pour le message de données à émettre, ladite identification de catégorie comprenant l'utilisation par l'objet connecté d'au moins une fonction de catégorisation pour calculer une valeur de catégorie à partir de caractéristiques du message de données à envoyer.

Une fois que le message à envoyer a été catégorisé, le procédé comporte une étape de transmission 420, par l'objet connecté IoT1, du message de données M1 à la passerelle disponible qui présente, pour la catégorie du message, le niveau de priorité maximum. Dans le cas illustré à la figure 2, la catégorie 1 a été attribuée au message M1. Ainsi, étant donné que, comme cela a été précédemment mentionné, c'est la passerelle de connexion GW2 du sous réseau 12 qui présente le niveau de priorité maximum pour cette catégorie de message, le message M1 est transmis par l'objet connecté à la passerelle de connexion GW2.

Le message de données M1 émis par l'objet IoT1, peut contenir :
- le type de message (par exemple le type « données » dans l'exemple considéré ici) ;
- un identifiant unique de l'expéditeur (par exemple son adresse IP)
- un identifiant unique du destinataire (par exemple son adresse IP)
- un code d'application identifiant l'application émettrice du message de données envoyé, et un numéro unique du message incrémenté (en cas de retransmission du même message M1) ;
- les données applicatives ; ainsi que de préférence,
   - sa date d'expiration ; et
   - une somme de contrôle (« Checksum » en anglais) permettant de valider l'intégrité du message transmis.

A réception du message M1, le destinataire final IoT2 transmet le message à l'applicatif qu'il héberge. Cet applicatif retourne alors un message d'acquittement A1 à destination de l'expéditeur IoT1. Le message d'acquittement A1 utilise le même mécanisme de transport. Le message d'acquittement A1 peut contenir :
- l'identifiant de l'expéditeur (son adresse IP dans l'exemple) ;
- le destinataire (son adresse IP dans l'exemple) ;
- le code d'application et le numéro unique du message M1 d'origine ; ainsi que de préférence
- sa date d'expiration ;
- le type de message, à savoir « acquittement » dans le cas présent ; et,
- une somme de contrôle permettant de valider l'intégrité du message d'acquittement A1 transmis.

Chaque objet connecté gère une liste de messages reçus. Ainsi, si un message déjà traité par l'objet destinataire IoT2 est à nouveau reçu, il est simplement acquitté sans nouveau traitement.

Les messages non acquittés après l'expiration du délai de remise prévu sont retransmis de façon automatique par l'objet émetteur IoT1, et ce délai est paramétrable. Avantageusement, le routage du message M1 retransmis tient compte d'une éventuelle mise à jour du maillage des réseaux locaux 11, 12 et 13 suite à la perte de connectivité d'une ou plusieurs passerelles, par exemple. Ceci est avantageux car si la non remise du message M1 dans le temps imparti a été causée par un problème au niveau de la passerelle GW1, GW2 ou GW3 par laquelle le message M1 d'origine a été routé, alors la retransmission du message M1 peut éviter de rencontrer le même problème. Dit autrement, l'adaptation du routage des messages émis par l'objet connecté IoT1 à toute évolution de la connectivité des passerelles disponibles permet d'éviter que des problèmes liés à une passerelle défaillante ne se répètent d'une (re)transmission à l'autre du message non remis au destinataire final dans le temps imparti.

Concernant le routage de chaque occurrence (quand il y en a plusieurs en raison d'une retransmission, le cas échéant) du message de données M1 émis par l'objet connecté émetteur IoT1, il convient de distinguer deux cas distincts. Ces deux cas se distinguent selon le classement des niveaux de priorité P1.1, P1.2, P2.1 et P2.2 des passerelles GW1 et GW2, respectivement, qui permettent d'établir la connexion à Internet de l'objet connecté émetteur IoT1.

Le message de données M1 est transmis par l'objet connecté émetteur IoT1 à celle des passerelles de connexion qui présente le niveau de priorité le plus élevé, en vue de sa transmission à l'objet connecté IoT2. On notera que le niveau le plus élevé peut correspondre à une valeur qui est soit la plus faible soit la plus élevée, en fonction de la fonction de calcul de priorisation.

Si, pour cette catégorie de message, la passerelle GW2 a un niveau de priorité P1.2 plus élevé que le niveau de priorité P1.1 de la passerelle GW1 (cas P1.2>P1.1 pour l'envoi 420 à la figure 2), le message M1 est transmis à l'étape 420 à la passerelle GW2 la plus prioritaire. Il atteint *in fine* l'objet connecté destinataire IoT2 après transmission à travers l'Internet 10, sous réserve bien entendu de son acheminement dans le temps imparti car il peut être détruit au passage de tout équipement de réseau (passerelle, routeur) si sa durée de validité a expiré avant qu'il n'atteigne la destination. Le message d'acquittement A1 renvoyé en 421 par l'objet connecté destinataire IoT2 à destination de l'objet connecté émetteur IoT1, emprunte alors une connexion qui peut être la même route en retour c'est-à-dire se faire également via la passerelle GW2 (comme dans l'exemple représenté en figure 2), ou être une autre route, en fonction des algorithmes de routage mis en œuvre dans le réseau Internet 10. Ainsi, le fait que l'accès au réseau Internet 10 se soit fait par l'intermédiaire de la passerelle GW2 pour l'envoi du message de données M1 par l'objet connecté émetteur IoT1 ne contraint nullement l'établissement du chemin de connexion pour le retour du message d'acquittement correspondant A1 depuis l'objet connecté destinataire IoT2.

Dans le cas inverse où la passerelle GW1 aurait un niveau de priorité P1.1 plus élevé que le niveau de priorité P1.2 de la passerelle GW2, le message M1 serait transmis à la passerelle GW1 la plus prioritaire. Il atteindrait *in fine* l'objet connecté destinataire IoT2 après transmission à travers l'Internet 10. Le message d'acquittement A1 renvoyé par l'objet connecté destinataire IoT2 à destination de l'objet connecté émetteur IoT1 emprunterait alors une connexion qui là encore peut être la même route en retour, c'est-à-dire se faire via la passerelle GW1, ou être une autre route, en fonction de l'algorithme de routage mis en œuvre dans le réseau global.

Comme représenté à la **figure 2B****,** outre ces procédures optionnelles et avantageuses, un procédé 1 selon l'invention peut comporter une **procédure 500 de catégorisation de messages à transmettre.** Cette procédure 500 de catégorisation peut être mise en œuvre par les objets connectés tel que l'objet connecté IoT1.

Cette procédure 500 de catégorisation comporte en particulier une catégorisation 510 d'une requête Q1 à envoyer par l'objet connecté IoT1 émetteur de ladite requête. Cette catégorisation permet de définir une valeur de catégorie C1 de la requête Q1. Cette catégorisation peut comporter en particulier l'exécution par l'objet connecté IoT1 d'au moins une fonction de catégorisation f pour calculer une valeur de catégorie C1 de la requête Q1 à partir de paramètres de message de ladite requête. La procédure 500 de catégorisation comporte également une catégorisation 520 de la réponse R1 attendue par l'objet connecté IoT1 de façon à définir une valeur de catégorie C2 de la réponse. Comme précédemment mentionné, cette catégorisation 500 peut comporter en particulier l'exécution par l'objet connecté IoT1 d'au moins une fonction de catégorisation f pour calculer une valeur de catégorie C1 de la réponse R1 à partir de paramètres de message de ladite réponse.

Dans un exemple de mise en œuvre d'un procédé 1 conforme à l'invention présenté en figure 2B, une fonction de catégorisation f a été mémorisée par l'objet connecté IoT1 en vue de son utilisation par ledit objet connecté pour le calcul de deux catégories C1, C2 de message (i.e. une par message requête / réponse) sur la base des paramètres de message de la requête pQ1 et de la réponse pR1. Alternativement, deux fonctions de catégorisation f1 et f2 pourraient être utilisées dès lors, par exemple, qu'une première fonction f1 serait dédiée aux messages à envoyer (i.e. requête) et qu'une seconde fonction f2 serait dédiée aux messages à recevoir (i.e. réponse). A la figure 2B, ces calculs ont été symbolisés dans les bulles qui illustrent les étapes 510 et 520, respectivement par les expressions C1=f(pQ1) et C2=f(pR1), respectivement. Ces calculs utilisent donc la fonction f sur la base de paramètres de message de chaque message de requête Q1 et de réponse R1. Ainsi, les catégories C1 et C2 qui sont obtenus sont des valeurs véritablement comparables. En effet dans cet exemple, le message à envoyer ou requête Q1 est classifié dans la catégorie 1 tandis que le message de réponse R1 est classifié dans la catégorie 2.

Cette catégorisation peut par exemple se faire en fonction de plusieurs paramètres de message tels que de la taille du message à transmettre, d'un type d'application souhaitant envoyer un tel message (identifié par exemple par un code d'application), de l'identité du destinataire, ou encore d'une information sur le type de message à transmettre (e.g. fichier texte, fichier vidéo, vidéo en streaming, voix). En outre, l'attribution de la valeur de catégorie C1, C2 peut se faire via l'utilisation de tables de données ou d'une fonction de catégorisation f permettant de prendre en compte plusieurs paramètres. Ainsi, de façon préférée, un procédé selon l'invention comporte l'identification d'une catégorie de message C1, C2 pour le message de données à émettre, ladite identification de catégorie comprenant l'utilisation par l'objet connecté IoT1 d'au moins une fonction de catégorisation f pour calculer une valeur de catégorie à partir de caractéristiques du message à transmettre.

La figure 2B illustre également ce qui peut se passer lorsque l'objet connecté IoT1 émet une requête Q1 à destination d'un autre objet connecté, en l'occurrence à destination de l'objet connecté IoT2 du réseau local 14. Il s'agit **de l'étape d'envoi 600 d'une requête Q1 par l'objet**

### connecté IoT1.

Cette étape d'envoi 600 suit généralement la catégorisation 500 des messages à transmettre par l'objet connecté IoT1 décrite précédemment. Une telle catégorisation permet d'attribuer une valeur de catégorie C1, C2 auxdits messages. Une fois que les messages à transmettre ont été catégorisés, un procédé conforme à l'invention peut comporter une étape de transmission 610, par l'objet connecté IoT1, de la requête Q1 à la passerelle disponible qui présente, pour la catégorie C1, C2 du message, le niveau de priorité P1.1,P1.2,P2.1,P2.2 maximum. Dans le cas illustré à la figure 2B, la catégorie « un » C1 a été attribuée au message ou requête Q1. Ainsi, étant donné que, comme cela a été précédemment mentionné, c'est la passerelle de connexion GW2 du sous réseau 12 qui présente le niveau de priorité maximum pour cette catégorie de message, la requête Q1 est transmise par l'objet connecté IoT1 à la passerelle de connexion GW2. En outre, la requête Q1 ainsi transmise (e.g. message transmis) comporte un identifiant de la passerelle GW1 à utiliser pour la transmission de la réponse R1 à l'objet connecté IoT1 et cet identifiant correspond à l'identifiant de la passerelle GW1 qui présente le niveau de priorité P1.2 maximum pour la valeur de catégorie C2 de la réponse R1.

En particulier, en référence à la figure 2B, lorsque la catégorie C1, C2 de message est considérée, si P2.1>P1.1 et P1.2>P2.2 alors la passerelle GW2 ayant un niveau de priorité P2.1 sera prioritaire sur la passerelle GW1 ayant un niveau de priorité P1.1 pour la catégorie C1 de message alors que la passerelle GW1 ayant un niveau de priorité P1.2 sera prioritaire sur la passerelle GW2 ayant un niveau de priorité P2.2 pour la catégorie C2 de message.

Avantageusement, la requête Q1 transmise comporte également le port de la passerelle GW1 (i.e. passerelle de réponse) qui a été dédié à l'objet connecté IoT1. Ainsi, ce port pourra être utilisé pour la transmission de la réponse R1 à la passerelle de réponse GW1. Dans ces conditions, la passerelle de réponse GW1 pourra transmettre rapidement le message de réponse R1 à l'objet connecté IoT1.

De façon préférée, la requête Q1 transmise peut également comporter une indication temporelle correspondant à une période durant laquelle la réponse R1 doit être transmise. Cette indication temporelle peut par exemple être codée selon les standards internationaux. En outre, la période peut correspondre à un jour et un horaire précis ou bien à une plage temporelle durant laquelle la réponse R1 pourra être transmise. Ainsi, la passerelle présentant le niveau de priorité le plus élevé pour la transmission de la réponse R1 conservera ledit message de réponse R1 jusqu'à ce que ladite période indiquée soit atteinte. En outre, l'indication temporelle peut correspondre à une période redondante tel que par exemple un horaire donné tous les jours de la semaine. En outre, la requête Q1 transmise peut comporter une date d'expiration. Dans ce cas, chaque passerelle utilisée pour la transmission de la requête Q1 réalise une vérification de la date d'expiration et est configurée pour supprimer les messages qui ont expirés. En outre, une requête Q1 émise par l'objet IoT1, peut contenir :
- un type de message (par exemple le type « données » dans l'exemple considéré ici) ;
- un identifiant unique de l'expéditeur (par exemple son adresse IP)
- un identifiant unique du destinataire (par exemple son adresse IP)
- un code d'application identifiant l'application émettrice du message de données envoyé, et un numéro unique du message incrémenté (en cas de retransmission du même message ou requête Q1) ;
- des données applicatives ; et/ou
- une somme de contrôle (« Checksum » en anglais) permettant de valider l'intégrité du message transmis.

A réception du message ou requête Q1, le destinataire final IoT2 transmet le message à l'applicatif qu'il héberge. Cet applicatif retourne alors un message d'acquittement A1 à destination de l'expéditeur IoT1. Le message d'acquittement A1 peut utiliser le même mécanisme de transport que la requête Q1. Alternativement, il peut emprunter un chemin différent en appliquant le même principe d'acheminement de message de données et peut donc utiliser le même mécanisme de transport que la réponse R1. Le message d'acquittement A1 peut contenir :
- l'identifiant de l'expéditeur (son adresse IP dans l'exemple) ;
- l'identifiant du destinataire (son adresse IP dans l'exemple) ;
- un code d'application et le numéro unique du message ou requête Q1 d'origine ; ainsi que de préférence
- sa date d'expiration ;
- le type de message, à savoir « acquittement » dans le cas présent ; et/ou,
- une somme de contrôle permettant de valider l'intégrité du message d'acquittement A1 transmis.

Chaque objet connecté gère une liste de messages reçus. Ainsi, si un message déjà traité par l'objet destinataire IoT2 est à nouveau reçu, il est simplement acquitté sans nouveau traitement.

Les messages non acquittés après l'expiration d'un délai de remise prévu, éventuellement paramétrable, sont retransmis de façon automatique par l'objet émetteur IoT1. Avantageusement, le routage du message ou requête Q1 retransmis tient compte d'une éventuelle mise à jour du maillage des réseaux locaux 11, 12 et 13 suite à la perte de connectivité d'une ou plusieurs passerelles, par exemple. Ceci est avantageux car si la non remise du message ou requête Q1, dans le temps imparti, a été causée par un problème au niveau de la passerelle GW1, GW2 ou GW3 par laquelle le message Q1 d'origine a été routé, alors la retransmission du message Q1 peut éviter de rencontrer le même problème. Dit autrement, l'adaptation du routage des messages émis par l'objet connecté IoT1 à toute évolution de la connectivité des passerelles disponibles permet d'éviter que des problèmes liés à une passerelle défaillante ne se répètent d'une (re)transmission à l'autre du message non remis au destinataire final dans le temps imparti.

Suite à la réception du message Q1 (i.e. requête), le destinataire final loT2 prépare et transmet 620 un message de réponse R1 à l'objet connecté IoT1. Le message de réponse R1 peut utiliser le même mécanisme de transport à l'exception que la passerelle utilisée pour transmettre le message de réponse R1 à l'objet connecté IoT1 sera la passerelle désignée dans la requête Q1. C'est-à-dire la passerelle GW1 dont le niveau de priorité sera le plus élevé pour la catégorie du message de réponse.

Concernant le routage de chaque occurrence (quand il y en a plusieurs en raison d'une retransmission, le cas échéant) du message ou requête Q1 émis par l'objet connecté émetteur IoT1, il convient de distinguer deux cas. Ces deux cas se distinguent selon le classement des niveaux de priorité P1.1, P1.2, P2.1 et P2.2 des passerelles GW1 et GW2, respectivement, qui permettent d'établir la connexion à un réseau principal, tel qu'à titre d'exemple non limitatif le réseau Internet, de l'objet connecté émetteur IoT1.

Le message ou requête Q1 est transmis par l'objet connecté émetteur IoT1 à la passerelle qui présente le niveau de priorité le plus élevé, en vue de sa transmission à l'objet connecté IoT2. On notera que le niveau le plus élevé peut correspondre à une valeur qui est soit la plus faible soit la plus élevée, en fonction de la fonction de calcul de priorisation.

Si, pour cette catégorie de message, la passerelle GW2 a un niveau de priorité P1.2 plus élevé que le niveau de priorité P1.1 de la passerelle GW1 (cas P1.2>P1.1 pour l'envoi 610 à la figure 2B), le message ou requête Q1 est transmis à l'étape 610 à la passerelle GW2 la plus prioritaire. Il atteint *in fine* l'objet connecté destinataire IoT2 après transmission à travers l'Internet 10, sous réserve bien entendu de son acheminement dans le temps imparti car il peut être détruit au passage de tout équipement de réseau (passerelle, routeur) si sa durée de validité a expiré avant qu'il n'atteigne la destination. Un message d'acquittement A1 est renvoyé 611 par l'objet connecté destinataire IoT2 à destination de l'objet connecté émetteur IoT1, ledit message d'acquittement A1 emprunte alors une connexion qui peut être la même route en retour, c'est-à-dire que ladite connexion peut se faire également via la passerelle GW2 (comme dans l'exemple représenté en figure 2B), ou être une autre route, en fonction des algorithmes de routage mis en œuvre dans le réseau Internet 10. Ainsi, le fait que l'accès au réseau Internet 10 se soit fait par l'intermédiaire de la passerelle GW2 pour l'envoi du message ou requête Q1 par l'objet connecté émetteur IoT1 ne contraint nullement l'établissement du chemin de connexion pour le retour du message d'acquittement correspondant A1 depuis l'objet connecté destinataire IoT2.

L'homme du métier appréciera que la transmission d'un message de donnés par l'objet connecté émetteur IoT1 intervient directement à destination de l'objet connecté destinataire, c'est-à-dire sans passer par une quelconque passerelle donc sans considération de leurs niveaux de priorité respectifs, si ledit objet connecté destinataire appartient à un même sous-réseau 11 ou 12 que l'objet connecté émetteur IoT1. Ce cas n'est pas représenté par les figures 2A et 2B car il ne correspond pas à la mise en œuvre de l'invention.

En résumé, la mise en œuvre d'un procédé conforme à l'invention permet de proposer :
- un routage auto adaptatif des messages, en ce sens qu'il s'adapte d'une part à la catégorie de message à envoyer et d'autre part à l'état de connectivité des passerelles de connexion disponibles, le cas échéant, ledit état de connectivité étant évolutif, comme il a précédemment été exposé ;
- une optimisation des coûts de transport des messages puisque, à tout moment, la passerelle utilisée pour établir la connexion d'un objet connecté du réseau local à un autre objet connecté est la passerelle qui présente la plus grande priorité en ce sens qu'elle offre globalement les meilleures caractéristiques de connexion pour cette catégorie de message ; et
- une gestion de la durée de validité des messages transmis comme les mises en œuvre de protocoles en mode connecté de l'art antérieur.

Un **autre aspect** de l'invention se rapporte à un **produit programme d'ordinateur** comprenant une ou plusieurs séquences d'instructions stockées sur un support mémoire tangible, lisible par une machine comprenant un processeur, lesdites séquences d'instructions étant adaptées pour réaliser toutes les étapes d'un procédé conforme à l'invention lorsque le programme est lu dans le support de mémoire et exécuté par le processeur. Un **autre aspect** de l'invention, encore, se rapporte à un **support d'enregistrement** tangible, lisible par un ordinateur, stockant le programme de manière non-transitoire.

Dans le contexte général de l'IdO, l'invention se présente comme un mécanisme permettant de transmettre les données d'un objet connecté adapté pour être connecté à un sous-réseau donné vers un autre objet connecté appartenant à un sous-réseau différent. Ce mécanisme opère au niveau de la couche 4 du modèle d'interface des systèmes ouverts, ou OSI (de l'anglais « Open System Interface »), de l'Organisation internationale de normalisation ou ISO (en anglais : « International Standard Organization »). La couche 4 du modèle OSI est la couche Transport, qui est la première des couches hautes, directement par-dessus les trois couches matérielles : Physique, Liaison, et Réseau. Par-dessus la couche Transport se trouvent les autres couches hautes à savoir, dans cet ordre, les couches Session, Présentation et Application.

Dans ce contexte, un des acteurs principaux pour le procédé d'optimisation de l'utilisation de sous-réseaux en fonction de catégorie de message à envoyer décrit dans la présente invention est l'objet connecté (l'objet connecté émetteur) lui-même.

Ainsi, selon **un autre aspect,** l'invention porte sur un **objet connecté** adapté pour être connecté à plusieurs sous-réseaux, l'objet connecté IoT1 étant en outre adapté, de préférence configuré, pour mettre en œuvre ledit procédé d'optimisation de l'utilisation de sous-réseaux par catégorie de message à envoyer selon l'invention.

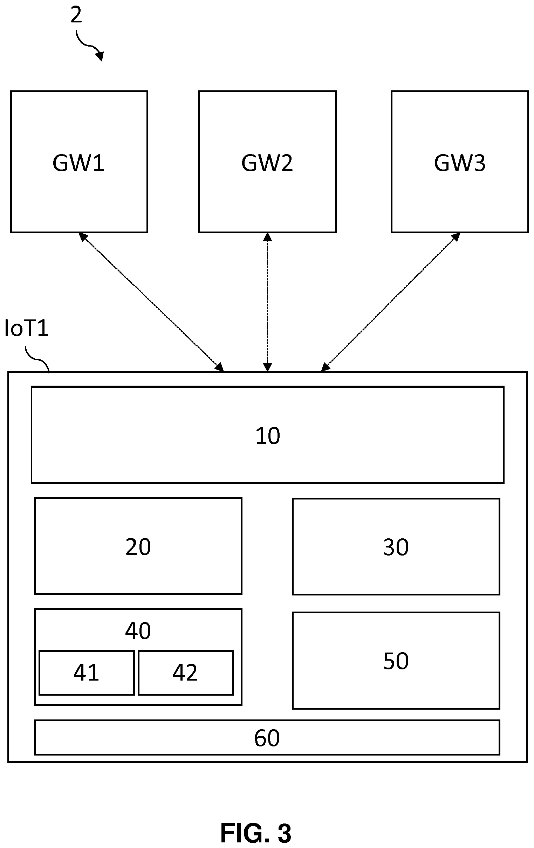

En particulier, comme illustré à la **figure 3****,** un objet connecté selon l'invention comprend un module 10 de découverte, un module 20 d'attribution de niveaux de priorité par catégorie de message à des passerelles disponibles, et un module 30 de classement des passerelles disponibles par ordre de leurs niveaux de priorité respectifs en fonction de la catégorie de message à envoyer. Un tel objet connecté peut alors choisir l'une desdites passerelles disponibles pour l'envoi de messages de données en fonction de la catégorie du message à envoyer.

Le **module 10 de découverte** comporte des moyens de connexion de l'objet connecté aux sous-réseaux disponibles, des moyens de diffusion d'un message d'interrogation dans les sous-réseaux disponibles, des moyens de réception d'un message de réponse envoyé par chacune des passerelles disponibles en réponse au message d'interrogation. En particulier, le message de réponse contient des paramètres de connectivité de la passerelle et une valeur de durée de validité desdits paramètres de connectivité. Les moyens de connexion, diffusion et réception sont des moyens de communication pouvant inclure des caractéristiques connues de la personne de l'art. Il peut s'agir de tout agencement matériel et logiciel apte à permettre l'échange de données entre l'objet connecté IoT1 et plusieurs passerelles GW1, GW2, er GW3. Les moyens de communication permettent en outre, de transmettre les données sur au moins un réseau de communication et peuvent comprendre une communication filaire ou sans fil. De préférence, la communication est opérée par l'intermédiaire d'un protocole sans fil tel que wifi, 3G, 4G, et/ou Bluetooth. Ces échanges de données peuvent prendre la forme d'envoi et de réception de fichiers ou de messages protocolaires. Les moyens de communication peuvent en outre être configurés pour permettre la communication avec un terminal distant, dont un client. Les moyens de communication peuvent en particulier être configurés pour mettre à jour périodiquement la ou les fonction(s) de priorisation et/ou de catégorisation de message. Les moyens de communication peuvent également être configurés pour communiquer avec une interface homme-machine. En particulier, le module 10 de découverte peut être configuré pour émettre un message d'interrogation de type BCM qui permettra à chaque passerelle ayant reçu le message d'interrogation d'envoyer un message de réponse idoine à destination de l'objet connecté ayant envoyé/transmis/émis un message d'interrogation de type BCM.

Le **module 20 d'attribution de niveaux de priorité** par catégorie de message aux passerelles disponibles comporte un processeur pour l'exécution d'au moins une fonction de priorisation, pour calculer des niveaux de priorité pour chaque passerelle disponible en fonction de la catégorie de message à envoyer. En outre, le module 20 d'attribution de niveaux de priorité peut comporter ou être couplé à d'autres moyens tels que des combinaisons de processeurs, de mémoire ainsi que de codes supportant des instructions.

Ainsi, chaque passerelle sera associée à son propre niveau de priorité par catégorie de message à envoyer, calculé avec une ou plusieurs fonctions de priorisation comprises dans la mémoire de donnée de l'objet connecté par l'objet connecté, ce qui permet d'obtenir des valeurs qui sont comparables entre elles pour définir un niveau de priorité par catégorie de message à envoyer.

Cette ou ces fonctions de priorisation, de même que la fonction de catégorisation, pourront par exemple être acquises par l'objet connecté *via* un appel à un ou plusieurs fichiers de configuration ou bien à des instructions transmises à partir d'une interface (e.g. graphique). Ainsi, le module 20 d'attribution de niveaux de priorité peut être configuré pour recevoir et prendre en compte des fonctions de priorisation par exemple mémorisées sur une mémoire telle qu'une mémoire vive.

En particulier, un objet connecté selon l'invention est apte à, de préférence configuré pour, mémoriser une ou plusieurs fonctions de priorisation et/ou de catégorisation. Par exemple, le module 50 de mémorisation est de préférence configuré pour mémoriser une ou plusieurs fonctions de priorisation de façon à pouvoir générer un niveau de priorité par catégorie de message à envoyer. Pour cela, le module 50 de mémorisation peut comprendre n'importe quel support lisible par ordinateur connu dans l'art comprenant, par exemple, une mémoire volatile, telle qu'une mémoire vive statique (SRAM) et une mémoire vive dynamique (DRAM), et / ou une mémoire non volatile, telle que mémoire morte, mémoires flash, disques durs, disques optiques et bandes magnétiques. Le module 50 de mémorisation peut comprendre une pluralité d'instructions ou de modules ou d'applications pour effectuer diverses fonctionnalités. Ainsi, le module 50 de mémorisation peut mettre en œuvre des routines, des programmes, ou des structures de données de type matricielle. De façon préférée, le module 50 de mémorisation peut comprendre un support lisible par un système informatique sous la forme d'une mémoire volatile, telle qu'une mémoire vive (RAM) et / ou une mémoire cache. Le module 50 de mémorisation, comme les autres modules, peut par exemple être connecté avec les autres composants de l'objet connecté IoT1 via un bus et une ou plusieurs interfaces de support de données.

**Le module 30 de classement des passerelles** disponibles est avantageusement configuré pour classer les passerelles par ordre de leurs niveaux de priorité respectifs en fonction de catégorie de message à envoyer. Cela permet à l'objet connecté de réaliser un choix rapide de la passerelle disponible la plus adaptée pour l'envoi d'un message de données.

En particulier, le module de classement des passerelles est configuré pour associer une fonction de calcul, nommée fonction de priorisation, à chaque catégorie de message à envoyer. Ces fonctions contiennent en variables un ou plusieurs paramètres de connectivité des passerelles selon l'importance de ces paramètres pour la transmission du message et leurs affectent un coefficient d'importance.

En outre, l'objet connecté selon l'invention peut comporter un **module 40 de gestion d'accès prioritaire.** Ce module 40 comporte en particulier des moyens 41 configurés pour catégoriser un message à envoyer. Il peut s'agir de tout agencement matériel et logiciel apte à permettre l'attribution une valeur de catégorie audit message à envoyer. Ce module 40 comporte également des moyens de transmission 42 du message, configurés pour envoyer ledit message de données à la passerelle disponible qui présente le niveau de priorité maximum pour la valeur de catégorie du message à envoyer. Le message de données est par exemple envoyé par un objet connecté à destination d'un autre objet connecté au travers d'au moins une passerelle de connexion.

Un objet connecté IoT1 selon l'invention peut en outre comporter notamment un **module 50 de catégorisation de messages.** Ce module 50 comporte en particulier des moyens configurés pour catégoriser un message à transmettre. Il peut s'agir de tout agencement matériel et logiciel apte à permettre l'attribution une valeur de catégorie C1, C2 audit message à transmettre.

Ce module 50 de catégorisation de messages est en particulier configuré pour catégoriser une requête Q1 à envoyer par l'objet connecté IoT1 de façon à définir une valeur de catégorie C1 de la requête Q1 et pour catégoriser une réponse R1 attendue par l'objet connecté émetteur IoT1 de façon à définir une valeur de catégorie C2 de ladite réponse.

Avantageusement, le module 50 de catégorisation de messages est configuré pour exécuter au moins une fonction de catégorisation f permettant de calculer les valeurs de catégorie C1, C2 de la requête Q1 et de la réponse R1 à partir de paramètres de message de ladite requête et de ladite réponse.

Par ailleurs, chaque objet connecté peut comporter un module de communication configuré pour envoyer un message de donnée lorsque le classement des niveaux de priorité est terminé. Par exemple, Un objet connecté selon l'invention peut notamment comporter une **interface réseau 60.** Cette interface réseau comporte en particulier des moyens configurés pour transmettre une requête Q1 à une passerelle disponible GTW2 présentant un niveau de priorité P2.1 maximum pour la valeur de catégorie C1 de la requête Q1, ladite requête transmise comportant un identifiant de la passerelle à utiliser pour la transmission de la réponse R1 à l'objet connecté IoT1, ledit identifiant correspondant à une passerelle GW1 présentant un niveau de priorité P1.2 maximum pour la valeur de catégorie C2 de la réponse.

Cette interface réseau 60 comporte également des moyens de transmission du message Q1 ou requête, configurés pour envoyer ledit message Q1 à la passerelle disponible qui présente le niveau de priorité P1.1,P1.2,P2.1,P2.2 maximum pour la valeur de catégorie C1, C2 du message à transmettre. Le message ou requête Q1 est par exemple envoyé par un objet connecté IoT1 à destination d'un autre objet connecté IoT2 au travers d'au moins une passerelle de connexion.

**Selon un autre aspect,** l'invention porte sur un **système 2 de communication de données** comprenant un objet connecté selon l'invention. Ce système 2 est particulièrement adapté pour la mise en œuvre d'un procédé selon l'invention. En outre, le système comporte des passerelles GW1,GW2,GW3 accessibles par un objet connecté selon l'invention et les passerelles peuvent transmettre un message envoyé par l'objet connecté à un autre objet connecté, récepteur, situé sur un autre sous-réseau.

En particulier, les passerelles sont configurées pour envoyer un message de réponse 131,132 en réponse au message d'interrogation BCM de l'objet connecté. Ces messages comportent notamment des paramètres de connectivité des passerelles et une valeur de durée de validité desdits paramètres de connectivité.

Les passerelles de connexion sont des équipements qui permettent la communication, l'échange et le transport de données entre objets connectés. Une passerelle assure la connexion entre des équipements d'un réseau local, chacun étant associé à une adresse IP locale, et des services de réseau principal associés à des adresses IP publiques. Ainsi, une même passerelle peut posséder au moins deux adresses IP. Le protocole IP (Internet Protocol) est la norme utilisée par les équipements connectés au réseau Internet pour communiquer entre eux. Ce protocole utilise une adresse (adresse IP) qui permet l'identification de l'équipement sur le réseau. De manière plus générale, une adresse IP est un numéro unique attribué à chaque équipement connecté à un réseau informatique : passerelle, ordinateurs, smartphones, serveurs sur Internet assurant un service, objets connectés sur un réseau local.... Cette adresse permet d'identifier individuellement les équipements sur le réseau, de les faire communiquer entre eux, et de les connecter à Internet. Il existe deux types d'adresses IP, à savoir les adresses IP publiques, d'une part, et les adresses IP locales, d'autre part.

Les adresses IP locales d'un réseau IP local filaire de type Ethernet (norme IEEE 802.3), par exemple, ou d'un réseau IP local sans fil de type Wi-Fi (norme IEEE 802.11a/b/g/n/ac), par exemple, sont gérées au niveau du réseau local, entre la passerelle de connexion du réseau local à Internet, et les équipements (ordinateurs, mobiles, objets connectés...) appartenant audit réseau local. Par exemple, un modem (i.e., une box) d'un fournisseur d'accès à Internet (FAI) est une passerelle de connexion à Internet qui possède une adresse IP locale spécifique par défaut. Les équipements d'utilisateur du réseau local qui sont connectés à la box pour accéder à Internet à travers ladite box, possèdent une adresse IP attribuée individuellement par la box, de même que tous les objets connectés au réseau local desservi par cette box. On notera que les adresses IP locales ne sont pas présentes sur Internet car leur fonction est seulement de permettre l'échange de données entre la passerelle de connexion à Internet et les équipements du réseau local.

L'adresse IP utilise un format spécifique défini par le protocole IP. Selon le format du protocole IP v4 (Internet Protocol Version 4), l'adresse IP est composée de 4 groupes de chiffres décimaux, qui représentent chacun une valeur entre 0 à 255, et séparés par le symbole « point » (exemple : 92.169.1.25). Ainsi, la plage d'adresses IP est potentiellement de 0.0.0.1 à 255.255.255.255. Le protocole IP v4 est utilisé à la fois pour les adresses IP locales et pour les adresses IP publiques. On notera toutefois que le format IP v6 (Internet Protocol Version 6) est amené à succéder au format IP v4, selon lequel l'adresse IP est composée de 8 groupes de 4 caractères hexadécimaux, notés de 0 à 9 et de A à F, et séparés par le symbole « deux-points ».

Selon un autre aspect, l'invention porte sur un objet connecté adapté pour accéder à plusieurs passerelles adaptées à la transmission d'une requête envoyée par l'objet connecté et à la transmission d'une réponse à ladite requête, l'objet connecté étant en outre apte à mettre en œuvre un procédé d'optimisation de l'utilisation de passerelles en fonction de catégories de messages à transmettre, et comprenant à cet effet :
- un module de catégorisation de messages configuré pour :
   o catégoriser une requête à envoyer par l'objet connecté de façon à définir une valeur de catégorie de la requête, et
   o catégoriser une réponse attendue par l'objet connecté de façon à définir une valeur de catégorie d'une réponse, et
   une interface réseau configurée pour transmettre la requête à une passerelle disponible présentant un niveau de priorité maximum pour la valeur de catégorie de la requête, ladite requête transmise comportant un identifiant de la passerelle à utiliser pour la transmission de la réponse à l'objet connecté, ledit identifiant correspondant à une passerelle présentant un niveau de priorité maximum pour la valeur de catégorie de la réponse.

Un objet connecté selon l'invention permet d'utiliser de façon optimisée des passerelles en fonction des messages à transmettre d'une part et de l'évolution de la connectivité de sous-réseaux d'autre part. En outre, un tel objet connecté présente l'avantage de pouvoir fonctionner avec des passerelles classiques étant donné que les calculs sont réalisés au niveau de l'objet connecté sur la base de caractéristiques transmises. Ainsi, grâce à l'invention, il est possible de réaliser un routage auto adaptatif, une optimisation des coûts de transports des messages et une gestion de la durée de validité des messages transmis. En outre, un tel objet connecté selon l'invention permet de tirer avantage de la multiplicité des passerelles vers l'Internet et de l'évolution dans le temps de leur connectivité.

Selon un autre aspect, l'invention porte sur un système de communication de données comprenant un objet connecté selon l'invention, ledit système comportant en outre des passerelles accessibles par ledit objet connecté pour transmettre un message d'interrogation et dans lequel les passerelles sont configurées pour envoyer un message de présentation en réponse audit message d'interrogation transmis par l'objet connecté, lesdits messages de présentation contenant des paramètres de connectivité des passerelles.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Comme cela a été décrit, la présente invention propose des solutions permettant un routage optimisé et auto adaptatif des messages d'un objet connecté, prenant en compte le message à envoyer d'une part et l'état de connectivité de l'ensemble des passerelles de connexion disponibles d'autre part. Ainsi, contrairement à l'état de la technique, la présente invention permet notamment de tirer avantage de la diversité de caractéristiques des messages à envoyer d'une part et de la multiplicité des passerelles d'un sous-réseau et de l'évolution dans le temps de leur connectivité d'autre part.

## Revendications

1. Procédé (1) d'optimisation de l'utilisation de passerelles (GW1,GW2,GW3) en fonction d'une catégorie de message à envoyer par un objet connecté (IoT1), ledit objet connecté (IoT1) étant apte à accéder à plusieurs passerelles (GW1,GW2,GW3) adaptées à la transmission d'un message envoyé par l'objet connecté, ledit procédé d'optimisation étant **caractérisé en ce que** :
- une procédure (100) de découverte, par l'objet connecté (IoT1), de passerelles disponibles pour l'objet connecté, ladite procédure (100) de découverte comprenant :
ola diffusion (120) par l'objet connecté (IoT1) d'un message d'interrogation (BCM) dans plusieurs sous-réseaux (11,12,13) de transport de données, et
ola réception (130) par l'objet connecté de messages de réponse (131,132) envoyés par chacune des passerelles disponibles en réponse au message d'interrogation (BCM), lesdits messages de réponse (131,132) contenant des paramètres de connectivité des passerelles et une valeur de durée de validité desdits paramètres de connectivité ;
- une procédure (200) d'attribution de niveaux de priorité (P1.1,P1.2,P2.1,P2.2) aux passerelles (GW1,GW2) disponibles par catégorie de message à envoyer, ladite procédure d'attribution de niveaux de priorité comprenant l'exécution (211, 212) par l'objet connecté d'au moins une fonction de priorisation, pour calculer des niveaux de priorité pour chaque passerelle à partir des paramètres de connectivité et en fonction de la catégorie de message à envoyer ; et
- une procédure de classement (300) par l'objet connecté des passerelles disponibles par ordre de leurs niveaux de priorité respectifs en fonction de la catégorie de message à envoyer, en vue du choix de l'une desdites passerelles disponibles pour l'envoi de messages de données ;
et **en ce que** les niveaux de priorité (P1.1,P1.2,P2.1,P2.2) des passerelles (GW1,GW2) disponibles par catégorie de message sont transmises par l'objet connecté à d'autres objets connectés.

2. Procédé selon la revendication 1, **caractérisé en ce qu'**il comprend en outre, lorsque l'objet connecté (IoT1) dit alors « émetteur » initie une étape d'envoi (400) d'un message de données (M1) :
- la catégorisation (410) du message à envoyer par l'objet connecté émetteur (IoT1), pour attribuer une valeur de catégorie audit message, et
- la transmission (420) du message de données (M1) par l'objet connecté émetteur (IoT1) à la passerelle disponible (GTW1) qui présente le niveau de priorité (P1.1,P1.2,P2.1,P2.2) maximum pour la catégorie du message à envoyer.

3. Procédé selon l'une des revendications 1 ou 2, **caractérisé en ce qu'**il comprend en outre une étape de mise à jour des niveaux de priorité, ladite étape de mise à jour comportant la diffusion ou la transmission par certaines au moins des passerelles disponibles de nouveaux paramètres de connectivité à l'objet connecté et une mise à jour automatique des niveaux de priorité desdites passerelles disponibles (GW1,GW2,GW3) par l'objet connecté.

4. Procédé selon la revendication 3, **caractérisé en ce que** l'étape de mise à jour comporte l'émission par l'objet connecté d'un message de mise à jour à destination de certaines au moins des passerelles disponibles, les passerelles destinataires étant sélectionnées en fonction de la valeur de durée de validité des paramètres de connectivité leur étant associée.

5. Procédé selon l'une quelconque des revendications précédentes, **caractérisé en ce que** les niveaux de priorité (P1.1,P1.2,P2.1,P2.2) des passerelles (GW1,GW2) disponibles par catégorie de message sont mémorisées sur une mémoire de l'objet connecté.

6. Procédé selon l'une quelconque des revendications précédentes, **caractérisé en ce que** les paramètres de connectivité propres à chaque passerelle (GW1,GW2) qui sont pris en compte, par l'objet connecté, pour le calcul des niveaux de priorité, comprennent : un type de connectivité, un coût de transport des données par unité de données, un indice de qualité de la connectivité, un temps de latence, et/ou un débit de transmission associés à la passerelle du réseau.

7. Procédé selon l'une quelconque des revendications précédentes, **caractérisé en ce qu'**il comporte, lorsque l'objet connecté (IoT1) initie une procédure d'envoi (600) d'une requête (Q1) :
- une procédure (500) de catégorisation de messages à transmettre, comportant une catégorisation (510) de la requête (Q1) à envoyer par l'objet connecté (IoT1) de façon à définir une valeur de catégorie (C1) de la requête (Q1) et une catégorisation (520) d'une réponse (R1) attendue par l'objet connecté (IoT1) de façon à définir une valeur de catégorie (C2) de la réponse (R1), les catégorisations (510, 520) comprenant l'exécution par l'objet connecté d'au moins une fonction de catégorisation, pour calculer les valeurs de catégorie de la requête (Q1) et de la réponse (R1) à partir de paramètres de message de ladite requête et de ladite réponse, et
- une transmission (610) de la requête (Q1) par l'objet connecté (IoT1) à une passerelle disponible (GW1) présentant un niveau de priorité (P1.1) maximum pour la valeur de catégorie (C1) de la requête (Q1), ladite requête transmise comportant un identifiant de la passerelle à utiliser pour la transmission de la réponse (R1) à l'objet connecté (IoT1), ledit identifiant correspondant à une passerelle (GW2) présentant un niveau de priorité (P2.2) maximum pour la valeur de catégorie (C2) de la réponse (R1).

8. Procédé selon la revendication 7, **caractérisé en ce que** la requête (Q1) transmise comporte en outre une indication temporelle correspondant à une période durant laquelle la réponse (R1) doit être transmise.

9. Procédé selon l'une des revendications 7 ou 8, **caractérisé en ce qu'**il comporte une procédure préalable d'attribution, par chacune des passerelles (GW1,GW2,GW3), d'une adresse IP fixe à l'objet connecté (IoT1) et d'un port dédié à ladite adresse IP fixe et **en ce que** tous les messages reçus sur ledit port dédié sont transmis à l'objet connecté (IoT1) à l'adresse IP fixe préalablement attribuée.

10. Procédé selon la revendication 9, **caractérisé en ce que** la requête (Q1) transmise comporte le port dédié à l'objet connecté (IoT1) de la passerelle à utiliser pour la transmission de la réponse (R1).

11. Procédé selon l'une quelconque des revendications 7 à 10, **caractérisé en ce que** les caractéristiques de message propres à chaque message à transmettre et pris en compte par l'objet connecté (IoT1) pour la catégorisation (500) du message, comprennent : la taille du message, un indice relatif à l'urgence du message, et/ou le format d'éventuels objets associés au message.

12. Objet connecté adapté pour être connecté à plusieurs sous-réseaux, l'objet connecté (IoT1) étant en outre apte à, de préférence configuré pour, mettre en œuvre un procédé d'optimisation de l'utilisation de passerelles disponibles en fonction d'une catégorie de message à envoyer, et comprenant à cet effet :
- un module (10) de découverte comportant :
odes moyens de diffusion d'un message d'interrogation (BCM) dans les sous-réseaux disponibles ; et
odes moyens de réception d'un message de réponse (R) envoyé par chacune des passerelles disponibles en réponse au message d'interrogation (BCM), ledit message de réponse (R) contenant des paramètres de connectivité des passerelles et une valeur de durée de validité desdits paramètres de connectivité ; et
- un module (20) d'attribution de niveaux de priorité (P1.1,P1.2,P2.1,P2.2), aux passerelles (GW1,GW2,GW3) disponibles, par catégorie de message, comportant un processeur pour l'exécution d'au moins une fonction de priorisation, pour calculer des niveaux de priorité (P1.1,P1.2,P2.1,P2.2) pour chaque passerelle disponible à partir des paramètres de connectivité et en fonction de la catégorie de message à envoyer ;
- un module (30) de classement des passerelles disponibles par ordre de leurs niveaux de priorité respectifs en fonction de la catégorie de message à envoyer, en vue du choix de l'une desdites passerelles disponibles pour l'envoi de messages de données.
ledit objet connecté étant en outre configuré pour transmettre les niveaux de priorité (P1.1,P1.2,P2.1,P2.2) des passerelles (GW1,GW2) disponibles par catégorie de message à d'autres objets connectés.

13. Objet connecté selon la revendication 12, **caractérisé en ce qu'**il comprend en outre un module (40) de gestion d'accès prioritaire comportant : des moyens de catégorisation (41) d'un message à envoyer, configurés pour attribuer une valeur de catégorie audit message, des moyens de transmission (42) configurés pour transmettre le message à envoyer (M1) à la passerelle disponible (GTW1) qui présente le niveau de priorité maximum pour la valeur de catégorie du message à envoyer.

14. Système (2) de communication de données comprenant un objet connecté (IoT1) selon l'une des revendications 12 ou 13, ledit système comportant en outre des passerelles (GW1,GW2,GW3) accessibles par ledit objet connecté pour transmettre un message et dans lequel les passerelles sont configurées pour envoyer un message de réponse (131,132) en réponse au message d'interrogation (BCM) de l'objet connecté, lesdits messages de réponse (131,132) contenant des paramètres de connectivité des passerelles et une valeur de durée de validité desdits paramètres de connectivité.

## Patentansprüche

1. Verfahren (1) zum Optimieren der Nutzung von Gateways (GW1, GW2, GW3) in Abhängigkeit von einer Kategorie von Nachrichten, die von einem verbundenen Objekt (loT1) gesendet werden sollen, wobei das verbundene Objekt (loT1) in der Lage ist, auf mehrere Gateways (GW1, GW2, GW3) zuzugreifen, die für die Übertragung einer von dem verbundenen Objekt gesendeten Nachricht geeignet sind, wobei das Optimierungsverfahren **gekennzeichnet ist durch:**
- eine Prozedur (100) zum Entdecken von für das verbundene Objekt verfügbaren Gateways **durch** das verbundene Objekt (loT1), wobei die Prozedur (100) zum Entdecken umfasst:
o Verbreiten (120) einer Abfragenachricht (BCM) in mehreren Teilnetzen (11, 12, 13) für den Datentransport **durch** das verbunden Objekt (loT1), und
o Empfangen (130) von Antwortnachrichten (131, 132), die von jedem der verfügbaren Gateways als Antwort auf die Abfragenachricht (BCM) gesendet werden, **durch** das verbundene Objekt, wobei die Antwortnachrichten (131, 132) Konnektivitätsparameter der Gateways und einen Wert für die Gültigkeitsdauer der Konnektivitätsparameter enthalten;
- eine Prozedur (200) zum Zuweisen von Prioritätsstufen (P1.1, P1.2, P2.1, P2.2) an die verfügbaren Gateways (GW1, GW2) pro Kategorie der zu sendenden Nachricht, wobei die Prozedur zum Zuweisen von Prioritätsstufen die Ausführung (211, 212) mindestens einer Priorisierungsfunktion **durch** das verbundene Objekt umfasst, um für jedes Gateway aus den Konnektivitätsparametern und in Abhängigkeit von der Kategorie der zu sendenden Nachricht Prioritätsstufen zu berechnen; und
- eine Prozedur zum Klassifizieren (300) der verfügbaren Gateways in der Reihenfolge ihrer jeweiligen Prioritätsstufen in Abhängigkeit von der Kategorie der zu sendenden Nachricht **durch** das verbundene Objekt, um eines der verfügbaren Gateways für das Senden von Datennachrichten auszuwählen;
und dadurch, dass die Prioritätsstufen (P1.1, P1.2, P2.1, P2.2) der Gateways (GW1, GW2), die pro Nachrichtenkategorie verfügbar sind, von dem verbundenen Objekt an andere verbundene Objekte übertragen werden.

2. Verfahren nach Anspruch 1, **dadurch gekennzeichnet, dass** es ferner, wenn das verbundene Objekt (loT1), das dann als "sendend" bezeichnet wird, einen Schritt des Sendens (400) einer Datennachricht (M1) initiiert, umfasst:
- das Kategorisieren (410) der Nachricht, die von dem sendenden verbundenen Objekt (loT1) gesendet werden soll, um der Nachricht einen Kategoriewert zuzuweisen, und
- das Übertragen (420) der Datennachricht (M1) vom sendenden verbundenen Objekt (IoT1) an das verfügbare Gateway (GTW1), das die höchste Prioritätsstufe (P1.1, P1.2, P2.1, P2.2) für die Kategorie der zu sendenden Nachricht aufweist.

3. Verfahren nach einem der Ansprüche 1 oder 2, **dadurch gekennzeichnet, dass** es ferner einen Schritt zum Aktualisieren der Prioritätsstufen umfasst, wobei der Aktualisierungsschritt die Verbreitung oder Übertragung von neuen Konnektivitätsparametern durch mindestens einige der verfügbaren Gateways an das verbundene Objekt und ein automatisches Aktualisieren der Prioritätsstufen der verfügbaren Gateways (GW1, GW2, GW3) durch das verbundene Objekt umfasst.

4. Verfahren nach Anspruch 3, **dadurch gekennzeichnet, dass** der Aktualisierungsschritt das Senden einer Aktualisierungsnachricht durch das verbundene Objekt an mindestens einige der verfügbaren Gateways umfasst, wobei die Empfänger-Gateways in Abhängigkeit von dem ihnen verbundenen Wert für die Gültigkeitsdauer der Konnektivitätsparameter ausgewählt werden.

5. Verfahren nach einem der vorstehenden Ansprüche, **dadurch gekennzeichnet, dass** die Prioritätsstufen (P1.1, P1.2, P2.1, P2.2) der Gateways (GW1, GW2), die pro Nachrichtenkategorie verfügbar sind, in einem Speicher des verbundenen Objekts gespeichert werden.

6. Verfahren nach einem der vorstehenden Ansprüche, **dadurch gekennzeichnet, dass** die zu jedem Gateway (GW1, GW2) gehörenden Konnektivitätsparameter, die vom verbundenen Objekt zur Berechnung der Prioritätsstufen berücksichtigt werden, umfassen: einen Konnektivitätstyp, Datentransportkosten pro Dateneinheit, einen Konnektivitätsqualitätsindex, eine Latenzzeit und/oder eine Übertragungsrate, die dem Gateway des Netzwerks verbunden sind.

7. Verfahren nach einem der vorstehenden Ansprüche, **dadurch gekennzeichnet, dass** es, wenn das verbundene Objekt (loT1) eine Prozedur zum Senden (600) einer Anfrage (Q1) initiiert, umfasst:
- eine Prozedur (500) zum Kategorisieren von zu übertragenden Nachrichten, umfassend das Kategorisieren (510) der vom verbundenen Objekt (IoT1) zu sendenden Anfrage (Q1), um einen Kategoriewert (C1) der Anfrage (Q1) zu definieren, und das Kategorisieren (520) einer vom verbundenen Objekt (IoT1) erwarteten Antwort (R1), um einen Kategoriewert (C2) der Antwort (R1) zu definieren, wobei die Kategorisierungen (510, 520) das Ausführen mindestens einer Kategorisierungsfunktion durch das verbundene Objekt umfassen, um die Kategoriewerte der Anfrage (Q1) und der Antwort (R1) aus Nachrichtenparametern der Anfrage und der Antwort zu berechnen, und
- das Übertragen (610) der Anfrage (Q1) durch das verbundene Objekt (loT1) an ein verfügbares Gateway (GW1), das eine höchste Prioritätsstufe (P1.1) für den Kategoriewert (C1) der Anfrage (Q1) aufweist, wobei die übertragene Anfrage eine Kennung des Gateways umfasst, das für das Übertragen der Antwort (R1) an das verbundene Objekt (loT1) verwendet werden soll, wobei die Kennung einem Gateway (GW2) entspricht, das eine höchste Prioritätsstufe (P2.2) für den Kategoriewert (C2) der Antwort (R1) aufweist.

8. Verfahren nach Anspruch 7, **dadurch gekennzeichnet, dass** die gesendete Anfrage (Q1) ferner eine Zeitangabe umfasst, die einem Zeitraum entspricht, während dessen die Antwort (R1) übertragen werden soll.

9. Verfahren nach einem der Ansprüche 7 oder 8, **dadurch gekennzeichnet, dass** es eine vorangehende Prozedur des Zuweisens einer festen IP-Adresse an das verbundene Objekt (IoT1) und eines der festen IP-Adresse zugeordneten Ports durch jedes der Gateways (GW1, GW2, GW3) umfasst, und dass alle an dem zugeordneten Port empfangenen Nachrichten an das verbundene Objekt (IoT1) unter der vorher zugewiesenen festen IP-Adresse übertragen werden.

10. Verfahren nach Anspruch 9, **dadurch gekennzeichnet, dass** die übertragene Anfrage (Q1) den dem verbundenen Objekt (loT1) zugeordneten Port des Gateways umfasst, das für die Übertragung der Antwort (R1) verwendet werden soll.

11. Verfahren nach einem der Ansprüche 7 bis 10, **dadurch gekennzeichnet, dass** die Nachrichtenmerkmale, die zu jeder zu übertragenden Nachricht gehören und von dem verbundenen Objekt (IoT1) beim Kategorisieren (500) der Nachricht berücksichtigt werden, umfassen: die Größe der Nachricht, einen Index bezüglich der Dringlichkeit der Nachricht und/oder das Format möglicher Objekte, die mit der Nachricht verbunden sind.

12. Verbundenes Objekt, das dazu geeignet ist, mit mehreren Teilnetzen verbunden zu werden, wobei das verbundene Objekt (IoT1) ferner dazu geeignet und vorzugsweise dazu konfiguriert ist, ein Verfahren zum Optimieren der Nutzung verfügbarer Gateways in Abhängigkeit von einer zu sendenden Nachrichtenkategorie durchzuführen, und zu diesem Zweck umfasst:
- ein Entdeckungsmodul (10), umfassend:
∘ Mittel zur Verbreitung einer Abfragenachricht (BCM) in den verfügbaren Teilnetzen; und
∘ Mittel zum Empfangen einer Antwortnachricht (R), die von jedem der verfügbaren Gateways als Antwort auf die Abfragenachricht (BCM) gesendet wird, wobei die Antwortnachricht (R) Konnektivitätsparameter der Gateways und einen Wert für die Gültigkeitsdauer der Konnektivitätsparameter enthält; und
- ein Modul (20) zum Zuweisen von Prioritätsstufen (P1.1, P1.2, P2.1, P2.2) an die verfügbaren Gateways (GW1, GW2, GW3) pro Nachrichtenkategorie, umfassend einen Prozessor zum Ausführen mindestens einer Priorisierungsfunktion, um für jedes verfügbare Gateway aus den Konnektivitätsparametern und in Abhängigkeit von der Kategorie der zu sendenden Nachricht Prioritätsstufen (P1.1, P1.2, P2.1, P2.2) zu berechnen;
- ein Modul zum Klassifizieren (30) der verfügbaren Gateways in der Reihenfolge ihrer jeweiligen Prioritätsstufen in Abhängigkeit von der Kategorie der zu sendenden Nachricht, um eines der verfügbaren Gateways für das Senden von Datennachrichten auszuwählen;
wobei das verbundene Objekt ferner dazu konfiguriert ist, die Prioritätsstufen (P1.1, P1.2, P2.1, P2.2) der Gateways (GW1, GW2), die pro Nachrichtenkategorie verfügbar sind, an andere verbundene Objekte zu übertragen.

13. Verbundenes Objekt nach Anspruch 12, **dadurch gekennzeichnet, dass** es ferner ein Modul (40) zum Verwalten des prioritären Zugriffs umfasst, umfassend:
Mittel zum Kategorisieren (41) einer zu sendenden Nachricht, die dazu konfiguriert sind, der Nachricht einen Kategoriewert zuzuweisen,
Mittel zum Übertragen (42), die dazu konfiguriert sind, die zu sendende Nachricht (M1) an das verfügbare Gateway (GTW1) zu übertragen, das die höchste Prioritätsstufe für den Kategoriewert der zu sendenden Nachricht aufweist.

14. Datenkommunikationssystem (2), umfassend ein verbundenes Objekt (IoT1) nach einem der Ansprüche 12 oder 13, wobei das System ferner Gateways (GW1, GW2, GW3) umfasst, auf die das verbundene Objekt zum Übertragen einer Nachricht zugreifen kann, und wobei die Gateways dazu konfiguriert sind, eine Antwortnachricht (131, 132) als Antwort auf die Abfragenachricht (BCM) des verbundenen Objekts zu senden, wobei die Antwortnachrichten (131, 132) Konnektivitätsparameter der Gateways und einen Wert für die Gültigkeitsdauer der Konnektivitätsparameter enthalten.

## Claims

1. A method (1) for optimizing the use of gateways (GW1,GW2,GW3) based on a category of message to be sent by a connected object (IoT1), said connected object (loT1) being able to access several gateways (GW1,GW2,GW3) suitable for transmitting a message sent by the connected object, said optimization method being **characterized in that:**
- a procedure (100) of discovery, by the connected object (IoT1), of available gateways for the connected object, said procedure (100) of discovery comprising:
∘ broadcasting (120) by the connected object (IoT1) a query message (BCM) in a plurality of data transport subnets (11,12,13), and
∘ receiving (130) by the connected object response messages (131,132) sent by each of the available gateways in response to the query message (BCM), said response messages (131,132) containing gateway connectivity parameters and a value of the validity time of said connectivity parameters;
- a procedure (200) of attributing priority levels (P1.1, P1.2,P2.1, P2.2) to the available gateways (GW1,GW2) by category of message to be sent, said procedure for attributing priority levels comprising the execution (211, 212) by the connected object of at least one prioritization function, in order to calculate priority levels for each gateway from connectivity parameters and based on the category of message to be sent; and
- a procedure of classifying (300) by the connected object the available gateways by order of their respective priority levels based on the category of message to be sent, with a view to choosing one of said available gateways for sending data messages;
and **in that** the priority levels (P1.1,P1.2,P2.1,P2.2) of the available gateways (GW1,GW2) by category of message are transmitted by the connected object to other connected objects.

2. The method according to claim 1, **characterized in that** it further comprises, when the connected object (loT1) then referred to as "transmitter" initiates a step of sending (400) a data message (M1):
- categorizing (410) the message to be sent by the transmitter connected object (IoT1), in order to attribute a category value to said message, and
- transmitting (420) the data message (M1) by the transmitter connected object (loT1) to the available gateway (GTW1) which has the maximum priority level (P1.1,P1.2,P2.1,P2.2) for the category of the message to be sent.

3. The method according to one of claims 1 or 2, **characterized in that** it further comprises a step of updating the priority levels, said updating step including at least some of the available gateways broadcasting or transmitting new connectivity parameters to the connected object and the connected object automatically updating the priority levels of said available gateways (GW1,GW2,GW3).

4. The method according to claim 3, **characterized in that** the updating step includes the connected object transmitting an update message to at least some of the available gateways, the recipient gateways being selected based on the value of the validity time of the connectivity parameters associated with same.

5. The method according to any one of the preceding claims, **characterized in that** the priority levels (P1.1,P1.2,P2.1,P2.2) of the available gateways (GW1,GW2) by category of message are stored in a memory of the connected object.

6. The method according to any one of the preceding claims, **characterized in that** the connectivity parameters specific to each gateway (GW1,GW2) which are taken into account, by the connected object, to calculate the priority levels, comprise: a type of connectivity, a data transport cost per data unit, a connectivity quality index, a latency time, and/or a transmission rate associated with the gateway of the network.

7. The method according to any one of the preceding claims, **characterized in that** it includes, when the connected object (loT1) initiates a procedure to send (600) a request (Q1):
- a procedure (500) of categorizing messages to be transmitted, including a categorization (510) of the request (Q1) to be sent by the connected object (loT1) so as to define a category value (C1) of the request (Q1) and a categorization (520) of a response (R1) expected by the connected object (IoT1) so as to define a category value (C2) of the response (R1), the categorizations (510, 520) comprising the execution by the connected object of at least one categorization function, in order to calculate the category values of the request (Q1) and the response (R1) from message parameters of said request and said response, and
- transmitting (610) the request (Q1) by the connected object (loT1) to an available gateway (GW1) having a maximum priority level (P1.1) for the category value (C1) of the request (Q1), said transmitted request including an identifier of the gateway to be used to transmit the response (R1) to the connected object (IoT1), said identifier corresponding to a gateway (GW2) having a maximum priority level (P2.2) for the category value (C2) of the response (R1).

8. The method according to claim 7, **characterized in that** the transmitted request (Q1) further includes a time indication corresponding to a period during which the response (R1) must be transmitted.

9. The method according to one of claims 7 or 8, **characterized in that** it includes a previous procedure of attributing, by each of the gateways (GW1,GW2,GW3), a fixed IP address to the connected object (loT1) and a dedicated port to said fixed IP address and **in that** all the messages received over said dedicated port are transmitted to the connected object (loT1) to the previously attributed fixed IP address.

10. The method according to claim 9, **characterized in that** the transmitted request (Q1) includes the port dedicated to the connected object (loT1) of the gateway to be used to transmit the response (R1).

11. The method according to any one of claims 7 to 10, **characterized in that** the message characteristics specific to each message to be transmitted and taken into account by the connected object (loT1) in order to categorize (500) the message, comprise: the size of the message, an index relative to the urgency of the message, and/or the format of any objects associated with the message.

12. A connected object suitable for being connected to several subnets, the connected object (loT1) further being able to, preferably configured to, implement a method for optimizing the use of available gateways based on a category of message to be sent, and comprising to this end:
- a discovery module (10) including:
∘ means for broadcasting a query message (BCM) in the available subnets; and
∘ means for receiving a response message (R) sent by each of the available gateways in response to the query message (BCM), said response message (R) containing connectivity parameters of the gateways and a value of the validity time of said connectivity parameters; and
- a module (20) for attributing priority levels (P1.1,P1.2,P2.1,P2.2), to the available gateways (GW1,GW2,GW3), by category of message, including a processor for executing at least one prioritization function, for calculating priority levels (P1.1,P1.2,P2.1,P2.2) for each available gateway from the connectivity parameters and based on the category of message to be sent;
- a module (30) for classifying the available gateways by order of their respective priority levels based on the category of message to be sent, with a view to choosing one of said available gateways in order to send data messages.
said connected object further being configured to transmit the priority levels (P1.1, P1.2,P2.1, P2.2) of the available gateways (GW1,GW2) by category of message to other connected objects.

13. The connected object according to claim 12, **characterized in that** it further comprises a module (40) for managing priority access including:
- means for categorizing (41) a message to be sent, configured to attribute a category value to said message,
- transmission means (42) configured to transmit the message to be sent (M1) to the available gateway (GTW1) which has the maximum priority level for the category value of the message to be sent.

14. A data communication system (2) comprising a connected object (IoT1) according to one of claims 12 or 13, said system further including gateways (GW1,GW2,GW3) accessible by said connected object to transmit a message and wherein the gateways are configured to send a response message (131,132) in response to the query message (BCM) of the connected object, said response messages (131,132) containing connectivity parameters of the gateways and a value of the validity time of said connectivity parameters.
